(19) Europäisches Patentamt
European Patent Office
Office européen des brevets

(11) **EP 4 746 546 A1**

(12) **EUROPEAN PATENT APPLICATION**
published in accordance with Art. 153(4) EPC

(43) Date of publication:
**20.05.2026 Bulletin 2026/21**

(21) Application number: **24838672.4**

(22) Date of filing: **04.07.2024**

(51) International Patent Classification (IPC):
*H04W 68/00* (2009.01)

(52) Cooperative Patent Classification (CPC):
Y02D 30/70

(86) International application number:
**PCT/CN2024/103474**

(87) International publication number:
**WO 2025/011417 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.07.2023 CN 202310847056**

(71) Applicant: **Vivo Mobile Communication Co., Ltd.
Dongguan, Guangdong 523863 (CN)**

(72) Inventors:
• LI, Dongru
  **Dongguan, Guangdong 523863 (CN)**
• QU, Xin
  **Dongguan, Guangdong 523863 (CN)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **PAGING MONITORING DETERMINATION METHOD AND APPARATUS, INFORMATION TRANSMISSION METHOD AND APPARATUS, TERMINAL AND DEVICE**

(57) The present application relates to the technical field of communications, and discloses a paging monitoring determination method and apparatus, an information transmission method and apparatus, a terminal and a device. The paging monitoring determination method of embodiments of the present application comprises: a terminal monitors first information, the first information comprising at least one of a WUS and a PEI; and on the basis of at least one of the first information, the terminal determines whether to monitor paging or not, wherein the terminal is configured with any one of the following: configuration information of the WUS; and the configuration information of the WUS and configuration information of the PEI.

FIG. 5

**Description**

**CROSS-REFERENCE TO RELATED APPLICATIONS**

This application claims priority to Chinese Patent Application No. 202310847056.X, filed on July 11, 2023, which is incorporated herein by reference in its entirety.

**TECHNICAL FIELD**

This application pertains to the field of communication technologies, and specifically, to a paging monitoring determining method and apparatus, an information sending method and apparatus, a terminal, and a device.

**BACKGROUND**

In mobile communication, even when a terminal is not paged, the terminal still needs to periodically monitor paging based on paging cycles thereof, that is, the terminal monitors paging in all paging cycles, resulting in a poor power saving effect of the terminal.

**SUMMARY**

Embodiments of this application provide a paging monitoring determining method and apparatus, an information sending method and apparatus, a terminal, and a device, to resolve a problem that a power saving effect of the terminal is poor.

According to a first aspect, a paging monitoring determining method is provided, including:

A terminal monitors first information, where the first information includes at least one of a wake-up signal (wake-up signal, WUS) and a paging early indicator (paging early indicator, PEI).

The terminal determines, based on at least one item in the first information, whether to monitor paging.

The terminal is configured with any one of the following:

configuration information of the WUS; and
the configuration information of the WUS and configuration information of the PEI.

According to a second aspect, an information sending method is provided, including:

A network side device sends first information, where the first information includes:
a WUS or a WUS and a PEI.

According to a third aspect, a paging monitoring determining apparatus is provided, including:

a monitoring module, configured to monitor first information, where the first information includes at least one of a wake-up signal WUS and a paging early indicator PEI; and
a determining module, configured to determine, based on at least one item in the first information, whether to monitor paging.

A terminal is configured with any one of the following:

configuration information of the WUS; and
the configuration information of the WUS and configuration information of the PEI.

According to a fourth aspect, an information sending apparatus is provided, including:
a first sending module, configured to send first information, where the first information includes:
a WUS or a WUS and a PEI.

According to a fifth aspect, a terminal is provided. The terminal includes a processor and a memory, the memory stores a program or instructions capable of running on the processor, and the steps of the paging monitoring determining method provided in the embodiments of this application are implemented when the program or the instructions are executed by the processor.

According to a sixth aspect, a terminal is provided, including a processor and a communication interface. The communication interface is configured to monitor first information, where the first information includes at least one of a wake-up signal WUS and a paging early indicator PEI. The communication interface or the processor is configured to determine, based on at least item in the first information, whether to monitor paging, where the terminal is configured with any one of the following: configuration information of the WUS; and the configuration information of the WUS and configuration information of the PEI.

According to a seventh aspect, a network side device is provided. The network side device includes a processor and a memory, the memory stores a program or instructions capable of running on the processor, and the steps of the information sending method provided in the embodiments of this application are implemented when the program or the instructions are executed by the processor.

According to an eighth aspect, a network side device is provided, including a processor and a communication interface. The communication interface is configured to send first information, where the first information includes a wake-up signal WUS or a wake-up signal WUS and a paging early indicator PEI.

According to a ninth aspect, a readable storage medium is provided. The readable storage medium stores a program or instructions, and the steps of the paging monitoring determining method provided in the embodiments of this application are implemented or the steps of the information sending method provided in the embodiments of this application are implemented when the program or the instructions are executed by a processor.

According to a tenth aspect, a chip is provided. The chip includes a processor and a communication interface. The communication interface is coupled to the processor. The processor is configured to run a program or instructions to implement the paging monitoring determining method provided in the embodiments of this application or the information sending method provided in the embodiments of this application.

According to an eleventh aspect, a computer program/program product is provided. The computer program/-program product is stored in a storage medium. The computer program/program product is executed by at least one processor to implement the steps of the paging monitoring determining method provided in the embodiments of this application or the steps of the information sending method provided in the embodiments of this application.

According to a twelfth aspect, a wireless communication system is provided, including a terminal and a network side device. The terminal may be configured to perform the steps of the paging monitoring determining method provided on a terminal side in the embodiments of this application or the steps of the information sending method provided on a network side device side in the embodiments of this application.

In the embodiments of this application, the terminal monitors the first information, where the first information includes at least one of the WUS and the PEI; and the terminal determines, based on at least one item in the first information, whether to monitor paging, where the terminal is configured with any one of the following: configuration information of the WUS; and the configuration information of the WUS and configuration information of the PEI. In this way, whether to monitor paging is determined based on the at least one item in the first information. Therefore, the terminal can be prevented from monitoring paging in all paging cycles, thereby saving power of the terminal, and improving a power saving effect of the terminal.

## BRIEF DESCRIPTION OF DRAWINGS

FIG. 1 is a block diagram of a wireless communication system to which an embodiment of this application is applicable;
FIG. 2 is a schematic diagram of a structure of a terminal according to an embodiment of this application;
FIG. 3 is a schematic diagram of a signal according to an embodiment of this application;
FIG. 4 is a schematic diagram of a subgroup according to an embodiment of this application;
FIG. 5 is a flowchart of a paging monitoring determining method according to an embodiment of this application;
FIG. 6 is a flowchart of an information sending method according to an embodiment of this application;
FIG. 7 is a schematic diagram of an association relationship between an indication and a subgroup according to an embodiment of this application;
FIG. 8 is a schematic diagram of another association relationship between an indication and a subgroup according to an embodiment of this application;
FIG. 9 is a schematic diagram of another association relationship between an indication and a subgroup according to an embodiment of this application;
FIG. 10 is a schematic diagram of a wake-up subgroup indication according to an embodiment of this application;
FIG. 11 is a diagram of a structure of a paging monitoring determining apparatus according to an embodiment of this application;
FIG. 12 is a diagram of a structure of an information sending apparatus according to an embodiment of this application;
FIG. 13 is a diagram of a structure of a communication device according to an embodiment of this application;
FIG. 14 is a diagram of a structure of a terminal according to an embodiment of this application; and
FIG. 15 is a diagram of a structure of a network side device according to an embodiment of this application.

## DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a number of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed or the requested result.

It should be noted that a technology described in the embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6th Generation, 6G) communication system other than the NR system.

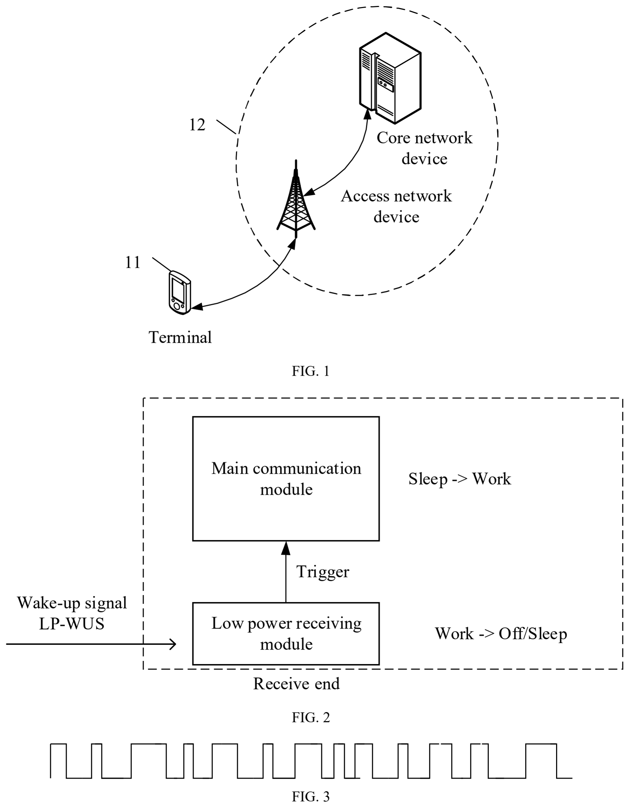

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home device (a home device with a wireless communication function, for example, a refrigerator, a television, a laundry machine, or a furniture), a gaming console, a personal computer (Personal Computer, PC), a teller machine, a self-service machine, or another terminal side device. The wearable device includes a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, and the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the art. The base station is not limited to a specific technical term, provided that the same technical effect is achieved. It should be noted that in embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, only a core network device in the NR system is used as an example for description, and a specific type of the core network device is not limited.

In some embodiments, the terminal is configured with a low power radio, or referred to as a low power wake-up radio (low power wake up radio, LP-WUR) or an almost zero power wake-up radio (almost zero power wake up radio, AZP-WUR). A basic working principle of the LP-WUR is that a receive end includes a first module and a second module. Specifically, as shown in FIG. 2, the first module is a main communication module and is configured to send/receive mobile communication data, and the second module is a low power receiving module (also referred to as a low power wake-up receiving module) and is configured to receive a WUS, for example, a low power wake-up signal (low power Wake-up signal, LP-WUS). In an energy-saving state, the terminal enables the low power receiving module to monitor the WUS, and disables the main communication module. When downlink data arrives, a network sends a WUS to the terminal. After monitoring the WUS by using the low power receiving module, the terminal triggers the main communication module after a series of determining, to change from a disabled state to an enabled state. In this case, the low power receiving module enters the disabled state from a working state. The low power wake-up receiving module may be continuously enabled or intermittently enabled, and may receive a low power wake-up signal when being enabled.

In some embodiments, to reduce receiving activities of a terminal in a standby state, so that a radio frequency (Radio Frequency, RF) module and a baseband modem (MODEM) module are truly disabled, and communication receiving power consumption is greatly reduced, the foregoing low power radio may be introduced into a receiving module of the terminal. In an embodiment, the almost "zero" power radio does not require complex signal detection (such as amplification, filtering, and quantization) by the radio frequency (Radio Frequency, RF) module and signal processing by the modem, and can only depend on passive matched filtering and low power signal processing.

In some embodiments, the WUS is a relatively simple on-off keying (on-off keying) signal. A time-domain pattern of the on-off keying signal is shown in FIG. 3. In this way, the radio can learn of a wake-up advertisement by using a process such as simple energy detection and subsequent possible sequence detection and identification. In another embodiment, the low power wake-up signal may be a frequency-shift keying (Frequency-Shift Keying, FSK) signal, an orthogonal frequency division multiplex (Orthogonal frequency division multiplex, OFDM) signal, or a mixed signal of an OFDM signal and an on-off keying (On-Off Keying, OOK) signal or an FSK signal. In addition, while the terminal enables the low power radio to receive the wake-up signal, a main radio module may maintain working at a low power level, thereby implementing power saving by receiving the wake-up signal.

In some embodiments, reception of the WUS may be applied to a terminal in a radio resource control idle state or an inactive state (RRC_idle/inactive), or may be applied to a terminal in a radio resource control connected state (RRC_connected), to implement power saving of the terminal.

In some embodiments, an OOK signal may be generated in an OFDM signal generation manner, for example, ON/OFF in a time domain is represented by sending or not sending an OFDM-modulated sequence. The OOK signal may be received by using a low power radio.

For a terminal in an idle (idle) state, the terminal may perform measurement of a synchronization signal block (Synchronization Signal Block, SSB) and receive paging in each paging (paging) cycle. Paging reception includes: The terminal monitors a paging physical downlink control channel (Physical downlink control channel, PDCCH) at a paging occasion (Paging Occasion, PO) associated therewith, and further receives a paging physical downlink shared channel (Physical downlink shared channel, PDSCH) after the paging PDCCH is detected. A plurality of terminals may be associated with one PO. Therefore, the terminal may be falsely woken up to monitor the paging PDCCH and the paging PDSCH due to another terminal in a same subgroup being paged, and the terminal does not return to sleep until the terminal confirms that a terminal identifier of the terminal does not exist in the paging PDSCH. Therefore, because the terminal detects the paging PDCCH/PDSCH in each paging cycle, and because a plurality of associated terminals exist in one PO subgroup, the terminal may be falsely woken up, resulting in unnecessary monitoring power consumption of the terminal.

In some embodiments, the terminal first receives a PEI before receiving the paging PDCCH, and the terminal determines, based on content indicated in downlink control information (Downlink Control Information, DCI) of the PEI, whether a subsequent paging PDCCH needs to be monitored. An advantage is that the terminal may determine, in advance based on the PEI, whether the paging PDCCH needs to be received. If the PEI indicates that the terminal does not receive the paging PDCCH, the terminal does not need to subsequently detect one or more SSBs after the PEI and before the PO, thereby implementing power saving.

In some embodiments, the PEI further has a function of performing further subgroup indication on a terminal subgroup in one PO. For example, the PEI is associated with and indicates one PO. The PEI carries 8-bit information, which is used for the PO to perform further terminal subgroup indication. Each bit corresponds to one subgroup (subgroup), that is, a paging early indicator for a total of eight subgroups may be indicated. In this way, terminals associated with one PO are further grouped into eight subgroups, and a PEI indication is provided for each subgroup, to reduce a probability that the terminal is falsely woken up, thereby reducing paging monitoring power consumption of the terminal.

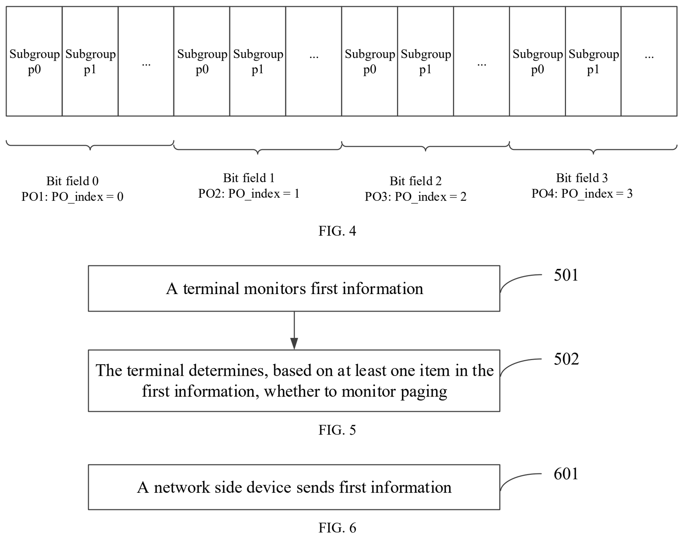

Specific fields indicated by the PEI are shown in FIG. 4. One PEI in FIG. 4 indicates four PO indexes 0 to 3, and each PO corresponds to up to eight subgroups.

In some embodiments, one PO corresponds to up to eight PEI subgroups (PEI subgroup). There may be two subgrouping manners: One is to subgroup based on a terminal identifier (UE_ID), and the other is to subgroup based on a subgroup index (subgroup index) directly indicated by a core network to the terminal. If subgrouping is performed based on UE_ID, a number of subgroups is subjected to a modulo operation based on UE_ID. In some cases, when a cell supports both core network subgroups and UE_ID-based subgroups, a number of core network subgroups is assigned first, for example, if there are six subgroups in a cell, with four UE_ID-based subgroups, 0 and 1 are assigned by the core network (Core Network, CN), and the UE_ID-based subgroups are 2, 3, 4, and 5. That is, when a cell supports both core network-based subgroups and UE_ID-based subgroups, the number of core network-based subgroups needs to be added to that of UE_ID-based subgroups, for example, if the UE_ID-based subgroups is calculated as 0, the number of CN-based subgroups is added to 0 to obtain 2. If the terminal is assigned by the core network, the core network directly informs the terminal which subgroup the terminal belongs to. In addition, in some cases, with reference to UE_ID-based subgroups in the PEI, how these UE_ID-based subgroups are further subgrouped may be learned of. In addition, the UE_ID-based subgroups may be supported by the terminal by default.

With reference to the accompanying drawings, the following describes in detail, by using some embodiments and application scenarios thereof, a paging monitoring determining method and apparatus, an information sending method and apparatus, a terminal, and a device that are provided in the embodiments of this application.

FIG. 5 is a flowchart of a paging monitoring determining method according to an embodiment of this application. As shown in FIG. 5, the method includes the following steps.

Step 501: A terminal monitors first information, where the first information includes at least one of a WUS and a PEI.

Step 502: The terminal determines, based on at least one item in the first information, whether to monitor paging.

The terminal is configured with any one of the following:

configuration information of the WUS; and
the configuration information of the WUS and configuration information of the PEI.

That the first information includes at least one of a WUS and a PEI may be understood as that the terminal monitors at least one of the WUS and the PEI.

Determining, based on the at least one item in the first information, whether to monitor paging may be determining, based on a monitoring result of the at least one item in the first information, whether to monitor paging, may be determining, based on indication content of the at least one item in the first information, whether to monitor paging, or may be determining, based on a monitoring result and indication content of the at least one item in the first information, whether to monitor paging. The monitoring result represents whether the WUS or the PEI is detected.

For example, in a case that the first information includes the WUS and the PEI, the terminal determines, based on a monitoring result or indication content of at least one of the WUS and the PEI, whether to monitor paging.

For another example, in a case that the first information includes the WUS, the terminal determines, based on a monitoring result or indication content of the WUS, whether to monitor paging.

Optionally, the configuration information of the WUS may explicitly or implicitly indicate that the terminal needs to monitor the WUS, and the configuration information of the PEI may explicitly or implicitly indicate that the terminal needs to monitor the PEI.

In an embodiment, in a case that the terminal is configured with the configuration information of the WUS, it does not mean that the terminal must monitor the WUS. Similarly, in a case that the terminal is configured with the configuration information of the PEI, it does not mean that the terminal must monitor the PEI. Specifically, whether the terminal monitors the WUS or the PEI depends on the terminal.

Optionally, the paging includes at least one of a paging PDCCH and a paging PDSCH.

The configuration information of the WUS and the configuration information of the PEI are configured before step 501.

Optionally, step 501 may include at least one of the following:

monitoring the WUS in a case that the terminal is configured with the configuration information of the WUS;

monitoring the WUS in a case that the terminal is configured with the configuration information of the WUS and the configuration information of the PEI;

monitoring the WUS and the PEI in a case that the terminal is configured with the configuration information of the WUS and the configuration information of the PEI; and

monitoring the PEI in a case that the terminal is configured with the configuration information of the WUS and the configuration information of the PEI.

In addition, the PEI may be further monitored in a case that the terminal is configured with the configuration information of the PEI.

In some implementations, for the WUS and the PEI, the terminal may monitor the WUS or the PEI associated with the terminal based on the PO subgroup. For example, the WUS is associated with the PEI.

In some implementations, there may be three network configuration possibilities. One is that a network is not configured with the PEI but is configured with only the WUS. In this case, the terminal monitors the WUS. Another one is that a network is configured with both the PEI and the WUS. In this case, the terminal may monitor the PEI and the WUS together or separately. A third one is that the WUS is not configured but only the PEI is configured. In this case, the terminal monitors only the PEI.

In this embodiment of this application, whether to monitor paging may be determined based on the at least one item in the first information in the foregoing step. Therefore, the terminal can be prevented from monitoring paging in all paging cycles, thereby saving power of the terminal, and improving a power saving effect of the terminal.

In an optional implementation, the WUS carries at least one of the following:

a subgrouping-based wake-up indication; and

an indication of whether to monitor the PEI.

The subgrouping-based wake-up indication is used to indicate whether to wake up a terminal associated with a subgroup.

The subgrouping-based wake-up indication may include a wake-up indication for one or more subgroups. There may be one or more subgroups. For only one subgroup, it means that subgrouping is not performed or there is no WUS subgroup.

In this embodiment of this application, the wake-up indication may also be referred to as wake-up indication information.

That the subgrouping-based wake-up indication is used to indicate whether to wake up a terminal associated with a subgroup may be understood as that the subgrouping-based wake-up indication is used to indicate whether the terminal associated with the subgroup monitors paging. In addition, wake-up of the terminal may also include waking up the terminal to monitor or transmit information other than paging information, for example, update system information, initiate random access, and monitor an SSB.

The indication of whether to monitor the PEI may be understood as that the indication carried in the WUS is used to indicate whether the terminal monitors the PEI.

In this implementation, subgroup indication may be performed on the terminal based on the subgrouping-based wake-up indication, to reduce a probability that the terminal is falsely woken up and save power of the terminal. In addition, the indication of whether to monitor the PEI is carried to flexibly indicate, based on a case, the terminal to monitor or not monitor the PEI.

Optionally, the subgrouping-based wake-up indication includes at least one of the following:

wake-up indications for M first subgroups, where the first subgroups are grouped based on terminal identifiers, and M is an integer greater than or equal to 1; and

wake-up indications for Q second subgroups, where the second subgroups are assigned by a core network, and Q is an integer greater than or equal to 0.

Optionally, in a case that Q is 0, it represents that the WUS does not carry the wake-up indications for the second subgroups.

Optionally, a sequence of the indications for the first subgroups and the indications for the second subgroups that are carried on the WUS is that the wake-up indications for the second subgroups are placed before the wake-up indications for the first subgroups.

The first subgroups and the second subgroups may also be referred to as WUS subgroups. For example, a wake-up indication (bit) for an mth WUS subgroup is used to indicate whether to wake up a terminal associated with the mth WUS subgroup, and a value of m is 0 to M-1. For another example, a wake-up indication (bit) for a qth WUS subgroup is used to indicate whether to wake up a terminal associated with a qth WUS subgroup, and a value of q is 0 to Q-1.

In some implementations, in a case that the terminal supports an indication for a WUS subgroup assigned by a core network, an index of a WUS subgroup assigned by the core network is assigned to the terminal by using non-access-stratum (Non-Access-Stratum, NAS) signaling.

In the foregoing implementation, wake-up indication may be performed based on the first subgroups or the second subgroups to reduce the probability that the terminal is falsely woken up. For example, there are 100 terminals, which are grouped into 10 WUS subgroups for separate wake-up indication, and a wake-up probability of each terminal is 1%. In this case, the probability that each terminal is falsely woken up is reduced to 1-(1-1%)^10=9.5% from 1-(1-1%)% ^100=63% when subgrouping is not performed. In this way, power consumption of the terminal caused by false wake-up can be reduced.

In some implementations, the foregoing WUS may further carry an available indication of a tracking reference signal (tracking reference signal, TRS).

In some embodiments, a second subgroup index carried in the WUS for the terminal is same as a subgroup index assigned by the core network carried in the PEI for the terminal.

In an optional implementation, the WUS is associated with K POs, and K is an integer greater than or equal to 1.

Optionally, the K POs associated with the WUS may be agreed in a protocol or configured by a network side device, and a value of K is also configured by the network side device or agreed in the protocol.

In an embodiment, K is 1, that is, one WUS is associated with one PO, which is equivalent to that the WUS indicates whether a terminal on the associated PO monitors paging.

In this implementation, the WUS may be associated with K POs, to perform wake-up indication on terminals associated with the K POs, to save power.

In an optional implementation, terminals associated with a first PO are grouped into the M first subgroups; or terminals associated with a first PEI subgroup are grouped into the M first subgroups.

The first PO is a PO associated with the WUS, the first PEI subgroup is a subgroup included in a PEI associated with the WUS, the first subgroups are grouped based on the terminal identifiers, the WUS carries the wake-up indications based on the first subgroups, the wake-up indications are used to indicate whether to wake up the terminals associated with the subgroups, and M is an integer greater than or equal to 1.

For the foregoing first subgroups and the wake-up indication, refer to corresponding descriptions of the foregoing implementations. Details are not described herein again.

A grouping manner of grouping the terminals associated with the first PO into the M first subgroups may be agreed in the protocol or configured by the network side device, and a grouping manner of grouping the terminals associated with the first PEI subgroup into the M first subgroups may be agreed in the protocol or configured by the network side device.

In this implementation, the wake-up indications for the M first subgroups grouped for the terminals associated with the first PO may be carried in the WUS or the wake-up indications for the M first subgroups grouped for the terminals associated with the first PEI subgroup may be carried in the WUS, to more flexibly wake up corresponding terminals, thereby reducing the false wake-up probability.

Optionally, subgroups included in the PEI associated with the WUS include:
all PEI subgroups corresponding to a second PO or a PEI subgroup grouped based on terminal identifiers in PEI subgroups corresponding to a second PO.

The second PO includes at least one of the following:

a PO associated with the WUS; and
partial or all POs associated with the PEI.

That the subgroups included in the PEI associated with the WUS include all PEI subgroups corresponding to a second PO may be understood as that terminals associated with all the PEI subgroups corresponding to the second PO are further grouped into a plurality of WUS subgroups.

The WUS has an association relationship with the PEI.

That the subgroups included in the PEI associated with the WUS include a PEI subgroup grouped based on terminal identifiers in PEI subgroups corresponding to a second PO may be understood as that only terminals associated with the PEI subgroup grouped based on the terminal identifiers in corresponding PEI subgroups are further grouped into a plurality of WUS subgroups.

In this implementation, all the PEI subgroups corresponding to the second PO or the PEI subgroup (the terminals associated therewith) grouped based on the terminal identifiers in the PEI subgroups corresponding to the second PO may be further grouped into the plurality of WUS subgroups. For example, the M first subgroups carried in the WUS are terminal subgroups grouped for terminals associated with the associated PEI, thereby further implementing subgroup wake-up indication, and further reducing the false wake-up probability.

Optionally, in the plurality of implementations described above, a grouping manner of the M first subgroups includes at least one of the following:

performing a first operation on the terminal identifier to obtain a first operation result, performing a modulo operation on the first operation result with respect to M, and adding a constant I to a result of the modulo operation to obtain a subgroup index of the terminal corresponding to the terminal identifier, where a value range of the subgroup index is 0 to M+I-1, and the constant I is an integer greater than or equal to 0; and
sequentially grouping or assigning the terminals into/to the M first subgroups in an ascending or descending order of the terminal identifiers.

Optionally, a value of the constant I may be agreed in the protocol or configured by the network side.

Optionally, in a case that the WUS is configured to carry the wake-up indications for the second subgroups described in the foregoing implementation, the constant I may be equal to Q, that is, a number of second subgroups. Alternatively, the constant I may be 0.

In some implementations, the first operation includes:

performing a rounding operation on (UE_ID/(N*Ns));
performing a rounding operation on (UE _ID/(N*Ns*subgroupsNumPerPO)); or
performing a rounding operation on (UE_ID/(N*Ns*subgroupsNumforUEID)).

The rounding operation may be rounding down or rounding up. For example, the first operation includes:

$$\mathrm{floor}(UE\_ID/(N*Ns));$$

$$\mathrm{floor}(UE\_ID/(N*Ns*subgroupsNumPerPO));$$

or

$$\mathrm{floor}(UE\_ID/(N*Ns*subgroupsNumforUEID)).$$

N represents a number of paging frames (paging frame, PF) in a paging cycle, Ns represents a number of POs in one PF, subgroupsNumPerPO represents a number of PEI subgroups grouped for terminals associated with one PO, and subgroupsNumforUEID represents a number of PEI subgroups grouped based on terminal identifiers for terminals associated with one PO.

In this way, the M first subgroups may be obtained through grouping in the following manner. For example, the rounding operation is rounding down, and the M first subgroups may be obtained through grouping in the following manner:

grouping terminals associated with a PO into the M first subgroups based on floor(UE_ID/(N*Ns)) mod M;
grouping terminals associated with one or more PEI subgroups into the M first subgroups based on floor(UE_ID/(N*Ns*subgroupsNumPerPO)) mod M; or
grouping terminals associated with one or more UE_ID-based PEI subgroups into the M first subgroups based on floor(UE_ID/(N*Ns*subgroupsNumforUEID)) mod M.

For example, the terminals associated with the paging occasion associated with the wake-up signal are grouped into the M first subgroups based on floor(UE_ID/(N*Ns)) mod M, or the terminals associated with the PEI subgroups associated with the wake-up signal are grouped into the M first subgroups based on floor(UE_ID/(N*Ns*subgroups-NumPerPO)) mod M or floor(UE_ID/(N*Ns* subgroupsNumforUEID)) mod M.

The sequentially grouping or assigning the terminals into/to the M first subgroups in an ascending or descending order of the terminal identifiers may be obtaining M segments through uniform division based on the terminal identifiers, so that the terminals associated with the first PO or the terminals associated with the first PEI subgroup are grouped into the M first subgroups (if uniform division fails, a number of terminals associated with a last first subgroup may vary).

Assignment refers to assignment of the associated terminals to a corresponding subgroup. For example, a terminal 0 is assigned to a first subgroup 0, and a terminal 1 is assigned to a first subgroup 1. Grouping refers to grouping of the associated terminals into a plurality of subgroups. For example, a terminal 0 to a terminal n are assigned to a first subgroup 0, and a terminal n+1 to a terminal 2n+1 are assigned to a first subgroup 1.

In the foregoing implementation, the first subgroup associated with the terminal may be determined in a plurality of grouping manners, to support the WUS to more flexibly wake up an associated terminal, thereby further reducing the false wake-up probability.

Optionally, a first subgroup index that the terminal associated with is obtained in the following manner: performing the first operation on the terminal identifier of the terminal to obtain the first operation result, and performing the modulo operation on the first operation result with respect to M, and the result of the modulo operation is the first subgroup index that the terminal associated with.

For the first operation, refer to corresponding descriptions of the foregoing implementations. Details are not described herein again.

In some implementations, the subgroup index that the terminal associated with may also be determined based on any of the following formulas:

$$WUS\_SubgroupID= (floor(UE\_ID/(N*Ns*subgroupsNumPerPO)) \bmod M);$$

$$WUS\_SubgroupID= (floor(UE\_ID/(N*Ns* \text{ or } subgroupsNumforUEID)) \bmod M);$$

and

$$WUS\_SubgroupID = (floor(UE\_ID/(N*Ns)) \bmod M).$$

WUS_SubgroupID represents the first subgroup index that the terminal associated with, M is a number of first subgroups or a number of first subgroups grouped for the terminals associated with one PO.

In some implementations, the subgroup index that the terminal associated with may also be determined based on any of the following formulas:

$$WUS\_SubgroupID= (floor(UE\_ID/(N*Ns*subgroupsNumPerPO)) \bmod M)+Q;$$

$$WUS\_SubgroupID= (floor(UE\_ID/(N*Ns* \text{ or } subgroupsNumforUEID)) \bmod M)+Q;$$

or

$$WUS\_SubgroupID = (floor(UE\_ID/(N*Ns)) \bmod M)+Q.$$

WUS_SubgroupID represents the first subgroup index that the terminal associated with. Q is a number of WUS subgroups based on core network-assigned which is configured by a network side device, that is, a number of second subgroups or a number of second subgroups grouped for terminals associated with one PO. It may be understood that an index of WUS subgroup based on core network-assigned of the terminal is informed by the core network.

Optionally, wake-up signal indication bits carried in the WUS are in a one-to-one correspondence with the subgroups carried in the WUS. The terminal determines, based on the index of the WUS subgroup thereof, a wake-up indication bit in the WUS that needs to be detected by the terminal.

In an embodiment, the index of the WUS subgroup is same as an index of the wake-up indication bit.

In the foregoing implementation, the first subgroup associated with the terminal may be determined based on the first operation, to support the WUS to more flexibly wake up an associated terminal, thereby further reducing the false wake-up probability.

Optionally, that the terminal determines, based on at least one item in the first information, whether to monitor paging includes:

In a case that the subgroups carried in the WUS include the first subgroups and the second subgroups, the terminal determines, based on the wake-up indication for the second subgroup associated with the terminal, whether to monitor paging.

In this implementation, in a case that the subgroups corresponding to the wake-up indication carried in the WUS include the second subgroups assigned by the core network and the first subgroups based on the terminal identifiers, the terminal determines, based on the wake-up indication for the second subgroup assigned by the core network that is carried in the WUS, whether to monitor paging. That is, in a case that the subgroups corresponding to the wake-up indication carried in the WUS include the second subgroups assigned by the core network and the first subgroups based on the terminal identifiers, the terminal determines, based on the wake-up indication for the second subgroup assigned by the core network, whether to monitor paging, and ignores the wake-up indication for the first subgroup based on the terminal identifiers.

It may be understood that if the second subgroup index is not assigned to the terminal or the terminal does not support the second subgroup assigned by the core network, the terminal can only determine, based on the wake-up indication for the first subgroup based on the terminal identifiers, whether to monitor paging.

Therefore, an implicit premise in the foregoing implementation is that the second subgroup index is assigned to the terminal.

That the terminal determines, based on the wake-up indication for the second subgroup associated therewith, whether to monitor paging may be that the terminal supports the second subgroup, that is, in a case that the terminal supports the second subgroup assigned by the core network, the terminal determines, based on the wake-up indication for the second subgroup associated therewith, whether to monitor paging. It should be noted that, in some implementations, by default, the terminal supports the first subgroups based on the terminal identifiers.

In this implementation, in the case that the subgroups carried in the WUS include the first subgroups and the second subgroups, whether to monitor paging is determined based on the wake-up indication for the second subgroup associated with the terminal. In this way, the second subgroup assigned by the core network may be preferentially used to ensure consistent understanding between the terminal and the core network regarding whether to monitor paging, thereby avoiding false wake-up of the terminal and further saving power.

Optionally, that the terminal determines, based on at least one item in the first information, whether to monitor paging includes:

In a case that the first information includes the WUS and the PEI, the WUS carries the wake-up indications for the second subgroups, and the PEI carries only paging early indicator information of a PEI subgroup grouped based on terminal identifiers, the terminal determines, based on the wake-up indication for the second subgroup associated with the terminal, whether to monitor paging.

That the PEI carries only paging early indicator information of a PEI subgroup grouped based on terminal identifiers may be understood as that paging early indicator information carried in the PEI is only the paging early indicator information of the PEI subgroup grouped based on the terminal identifiers.

In this implementation, in a case that the WUS carries the wake-up indications for the second subgroups and the PEI does not carry paging early indicator information of a PEI subgroup assigned by the core network, the terminal may determine, based on the wake-up indication for the second subgroup, whether to monitor paging. In this way, the second subgroup assigned by the core network may be preferentially used to ensure consistent understanding between the terminal and the core network regarding whether to monitor paging, thereby avoiding false wake-up of the terminal and further saving power.

For example, in a case that the terminal is configured with the configuration information of the WUS and the configuration information of the PEI, the subgroups carried in the WUS include the second subgroups assigned by the core network, the subgroups carried in the PEI include only the UE_ID-based PEI subgroups (do not include the PEI subgroups assigned by the core network), and the terminal supports the subgroups assigned by the core network, the terminal determines, based on the wake-up indications for the second subgroups carried in the WUS, whether to monitor paging. That is, in this case, the terminal monitors only an LP-WUS, and does not monitor the PEI. The terminal determines, only based on the wake-up indication for the second subgroup in the LP-WUS, whether to monitor paging.

Optionally, in a case that the first information includes the WUS and the PEI, the WUS carries the wake-up indications for the second subgroups, and the PEI carries paging early indicator information of a PEI subgroup assigned by the core network, that the terminal determines, based on at least one item in the first information, whether to monitor paging includes:

The terminal determines, based on the wake-up indication for the second subgroup associated with the terminal, whether to monitor paging;

determining, by the terminal based on the paging early indicator information of the PEI subgroup associated with the terminal and assigned by the core network that is carried in the PEI, whether to monitor paging; or

determining, by the terminal based on the wake-up indication for the second subgroup associated with the terminal and the paging early indicator information of the PEI subgroup associated with the terminal and assigned by the core network that is carried in the PEI, whether to monitor paging.

In an embodiment, the determining, based on the wake-up indication for the second subgroup associated with the terminal and the paging early indicator information of the PEI subgroup associated with the terminal and assigned by the core network that is carried in the PEI, whether to monitor paging may be that in a case that the terminal is woken up by the wake-up indication for the second subgroup associated with terminal and the terminal is also woken up by the paging early indicator information of the PEI subgroup associated with the terminal and assigned by the core network that is carried in the PEI, it is determined to monitor paging, otherwise, it is determined to not monitor paging; or may be that in a case that the terminal is woken up by any one of the wake-up indication for the second subgroup associated with the terminal and the paging early indicator information of the PEI subgroup associated with the terminal and assigned by the core network that is carried in the PEI, it is determined to monitor paging; or may be that in a case that the terminal is not woken up by any one of the wake-up indication for the second subgroup associated with the terminal and the paging early indicator information of the PEI subgroup associated with the terminal and assigned by the core network that is carried in the PEI, it is determined to not monitor paging; or may be that in a case that the terminal is not woken up by the wake-up indication for the second subgroup associated with the terminal, or the terminal is not woken up by the paging early indicator information of the PEI subgroup associated with the terminal and assigned by the core network that is carried in the PEI, it is determined to not monitor paging.

In this implementation, it is possible to support any one of the foregoing methods for determining whether to monitor paging, thereby enhancing compatibility with scenarios, services, or the like.

For example, in a case that the subgroups carried in the WUS include the second subgroups assigned by the core network, the subgroups carried in the PEI include the PEI subgroups assigned by the core network, and the terminal supports the second subgroups assigned by the core network and the PEI subgroups assigned by the CN, that the terminal determines whether to monitor paging includes any one of the following:

the terminal determines, based on the wake-up indication for the second subgroup assigned by the core network that is carried in the WUS, whether to monitor paging;
the terminal determines, based on the wake-up indication for the PEI subgroup assigned by the core network that is carried in the PEI, whether to monitor paging; or
the terminal determines, based on the wake-up indications for the subgroups assigned by the core network that are respectively carried in the WUS and the PEI, whether to monitor paging.

In an optional implementation, before the terminal monitors the first information, the method further includes: The terminal obtains paging configuration information, where the paging configuration information includes at least one of the following:

indication information used to indicate whether to monitor both the WUS and the PEI; and
the configuration information of the WUS.

The indication information used to indicate whether to monitor both the WUS and the PEI may be used to explicitly or implicitly indicate whether the terminal monitors both the WUS and the PEI. For example, the indication information indicates whether interaction between the PEI and the WUS is enabled. If the indication information indicates that interaction between the PEI and the WUS is enabled, it represents that both the WUS and the PEI are monitored. If the indication information indicates that interaction between the PEI and the WUS is not enabled, it represents that neither the WUS nor the PEI needs to be monitored.

The configuration information of the WUS may be the configuration information of the WUS described in the foregoing implementation, or may be configuration information different from the configuration information of the WUS described in the foregoing implementation. This is not limited herein.

The configuration information of the WUS may be paging-related configuration information of the WUS. For example, the configuration information of the WUS includes at least one of the following:

a number of WUS subgroups grouped for terminals associated with one PO (it may be understood as a number of WUS subgroups obtained through grouping based on one PO);
a number of WUS subgroups grouped for terminals associated with one PEI subgroup;
a number of WUS subgroups grouped for terminals associated with PEI subgroups in one PO;
a number of WUS subgroups grouped based on terminal identifiers for terminals associated with a PEI subgroup in one PO;
a number of WUS subgroups assigned and grouped by the core network;
a number of WUS subgroups grouped based on terminal identifiers; and
a number of bits of wake-up indication information carried in the WUS.

In an embodiment, the number of WUS subgroups assigned and grouped by the core network may be understood as a number of WUS subgroups associated with one PO and assigned by the core network, that is, a number of second subgroups associated with one PO, that is, a value of Q.

In an embodiment, the number of WUS subgroups grouped based on terminal identifiers may be understood as a number of WUS subgroups associated with one PO and based on the terminal identifiers, that is, a number of first subgroups associated with one PO, that is, a value of M.

In an embodiment, the number of bits of the wake-up indication information carried in the WUS may be 1, 2, 4, or 8.

In an embodiment, the number of WUS subgroups assigned and grouped by the core network is the number of second subgroups, that is, the value of Q. It may be understood that the number of WUS subgroups assigned and grouped by the core network is a number of WUS subgroups assigned and grouped by the core network that is carried in each WUS.

In an embodiment, the number of WUS subgroups grouped based on the terminal identifiers is the number of first subgroups, that is, the value of M.

In an embodiment, the number of bits of the wake-up indication information carried in the WUS is equal to a number of WUS subgroups carried in the WUS.

The number of WUS subgroups grouped for terminals associated with one PO may be referred to as a number of WUS subgroups in one PO, abbreviated as WUSSubgorupNumPerPO.

The number of WUS subgroups grouped for terminals associated with one PEI subgroup may be referred to as a number of WUS subgroups of one PEI subgroup, and a number of WUS subgroups grouped for terminals associated with each PEI subgroup or associated with terminals associated with each PEI subgroup is abbreviated as WUSSubgroup-NumPerPEISubgroup.

The number of WUS subgroups grouped for terminals associated with PEI subgroups in one PO may be referred to as a number of WUS subgroups of the PEI subgroups in one PO, and a number of WUS subgroups grouped for terminals associated with the (all) PEI subgroups in one PO is abbreviated as WUSSubgroupNumofPEISubgroupperPO.

The number of WUS subgroups grouped based on terminal identifiers for terminals associated with a PEI subgroup in one PO may be referred to as a number of WUS subgroups of a UE_ID-based PEI subgroup in one PO, abbreviated as WUSSubgroupNumofUE-IDbasedPEISubgroupperPO.

The number of WUS subgroups assigned and grouped by the core network may be abbreviated as CNbased-WUSSubgroupNum.

The number of WUS subgroups grouped based on terminal identifiers may be abbreviated as WUSSubgroup-NumforUE-ID.

In an embodiment, the WUS meets at least one of the following:

1) If PEI subgroups in configuration of the PEI include a UE_ID-based PEI subgroup, the WUS uses the UE_ID-based subgroup.
2) If PEI subgroups in configuration of the PEI include a PEI subgroup assigned by the core network, the WUS uses the subgroup assigned by the core network.
3) If PEI subgroups in configuration of the PEI include a UE_ID-based PEI subgroup and a PEI subgroup assigned by the core network, the LP-WUS uses the UE_ID-based subgroup and the subgroup assigned by the core network.

"The LP-WUS uses ..." means "the LP-WUS carries ..." or "the LP-WUS is configured with ...".

In this implementation, the terminal can better learn of paging-related configuration based on the paging configuration information, so that the terminal can more accurately obtain paging thereof, thereby reducing the false wake-up probability.

In some implementations, the paging configuration information may be partially or completely preconfigured or agreed in the protocol.

In addition, in some implementations, the configuration information of the WUS may be further configured with a number of POs associated with the WUS, that is, the value of K in the foregoing implementation.

Optionally, the network side device may support or not support the WUS subgroups assigned by the core network. Optionally, if the network side device does not support the WUS subgroups assigned by the core network, the WUS sent by the network side device does not carry the WUS subgroups assigned by the core network.

Optionally, before obtaining IDs of the subgroups assigned by the core network, the terminal reports a terminal capability to a network side node (including a base station and/or a core network node). The capability includes whether the terminal supports a WUS subgrouping capability assigned by the core network or supports a WUS subgrouping capability.

Optionally, the number of WUS subgroups grouped for terminals associated with one PO is equal to a sum of the following two items:

the number of WUS subgroups assigned and grouped by the core network; and
the number of WUS subgroups grouped based on terminal identifiers.

For example, the foregoing may be described as:
CNbasedWUSSubgroupNum=WUSSubgorupNumPerPO-WUSSubgroupNumforUE-ID.

In this implementation, the number of WUS subgroups grouped for terminals associated with one PO may be equal to the number of WUS subgroups assigned and grouped by the core network plus the number of WUS subgroups grouped based on terminal identifiers, so that the WUS supports subgroups grouped in two manners, thereby making WUS subgrouping more flexible, improving wake-up flexibility, and reducing the false wake-up probability.

In an optional implementation, in a first case, the first information includes the PEI, and the first case includes at least one of the following:

the WUS is detected by the terminal;
the WUS indicates to wake up the terminal;
the WUS indicates to monitor the PEI; and
the terminal obtains an indication of monitoring both the WUS and the PEI.

It should be noted that in the first case, the first information includes the PEI. It may be understood that the terminal monitors the PEI in the first case.

That the WUS is detected by the terminal may be understood as that it may be determined, based on whether the WUS is detected, whether to wake up the terminal. For example, if the WUS is detected by the terminal, it represents that the wake-up signal indicates to wake up the terminal, otherwise, it represents that the terminal is not woken up.

Optionally, waking up the terminal means that the terminal monitors paging.

Optionally, waking up the terminal may be that a main communication module of the terminal switches from a disabled state to an enabled state. In this case, a low power receiving module enters a disabled state from a working state or a low power wake-up receiving module may be continuously enabled or intermittently enabled, and may receive a low power wake-up signal when being enabled. Alternatively, waking up the terminal may be that the terminal switches from a sleep state to a wake-up state.

That the WUS indicates to wake up the terminal may be that a bit value of a wake-up indication corresponding to the terminal in the WUS is 1 or 0. Indicating to wake up the terminal may represent indicating the terminal to monitor information including paging.

In this implementation, whether to monitor PEI may be determined based on content detected by the terminal, to further save power of the terminal.

In an optional implementation, that the terminal determines, based on at least one item in the first information, whether to monitor paging includes at least one of the following:

in a second case, determining to monitor paging; and
in a third case, determining to not monitor paging.

The second case includes at least one of the following:

both the WUS and the PEI indicate to wake up the terminal; and
at least one of the WUS and the PEI indicates to wake up the terminal.

The third case includes at least one of the following:

neither the WUS nor the PEI indicates to wake up the terminal; and
at least one of the WUS and the PEI does not indicate to wake up the terminal.

Optionally, waking up the terminal means that the terminal monitors paging.

In this implementation, whether to monitor paging may be determined based on monitoring of at least one of the WUS and the PEI. For example, at least one of the following is included:

in a case that both the WUS and the PEI indicate to wake up the terminal, the terminal determines to monitor paging;
in a case that at least one of the WUS and the PEI indicates to wake up the terminal, the terminal determines to monitor paging;
in a case that neither the WUS nor the PEI indicates to wake up the terminal, the terminal determines to not monitor paging; and
in a case that at least one of the WUS and the PEI does not indicate to wake up the terminal, the terminal determines to not monitor paging.

Indicating to wake up the terminal may be waking up a subgroup associated with the terminal.

In this implementation, whether to monitor paging may be determined based on at least one of the WUS and the PEI, to implement flexible indication for paging.

In an optional implementation, in a case that the first information includes the WUS and the PEI, the determining, based on at least one item in the first information, whether to monitor paging includes:

in a case that the PEI is not detected by the terminal, determining, by the terminal, to not monitor paging; or
in a case that the PEI is not detected by the terminal, determining, by the terminal based on a monitoring result or indication information of the WUS, whether to monitor paging.

Alternatively, in a case that the first information includes the WUS and the PEI, the determining, based on at least one item in the first information, whether to monitor paging includes:
determining, based on the at least one item in the first information and network side configuration information, whether to monitor paging.

In a case that the PEI is not detected by the terminal, the terminal determines, based on the network side configuration information, whether to monitor paging.

In an embodiment, in a case that the WUS is detected by the terminal and the PEI is not detected by the terminal, the terminal determines to not monitor paging.

In an embodiment, in a case that the WUS is detected by the terminal and the PEI is not detected by the terminal, the terminal determines, based on a monitoring result or indication information of the WUS, whether to monitor paging.

In an embodiment, in a case that the WUS is detected by the terminal and the PEI is not detected by the terminal, the terminal determines, based on the network side configuration information, whether to monitor paging.

In an embodiment, in a case that the WUS is not detected by the terminal and the PEI is not detected by the terminal, the terminal determines to not monitor paging.

In an embodiment, in a case that the WUS is not detected by the terminal and the PEI is not detected by the terminal, the terminal determines, based on a monitoring result or indication information of the WUS, whether to monitor paging.

In an embodiment, in a case that the WUS is not detected by the terminal and the PEI is not detected by the terminal, the terminal determines, based on the network side configuration information, whether to monitor paging.

For example, that the PEI is not detected by the terminal includes: The terminal is configured to monitor the WUS and the PEI, and the terminal performs a monitoring action but the PEI is not detected.

The determining, based on a monitoring result or indication information of the WUS, whether to monitor paging may be determining, when the WUS is detected by the terminal, to monitor paging, or may be determining, when the indication information of the WUS indicates to monitor paging, to monitor paging.

The network side configuration information may be network side configuration information obtained in advance, or network side configuration information dynamically delivered by a network side. The network side configuration information is used to indicate the terminal whether to monitor paging.

In this implementation, in the case that the PEI is not detected by the terminal, whether to monitor paging may be flexibly determined, to prevent the terminal from missing paging thereof.

In an optional implementation, a PO associated with the WUS is same as a PO associated with the PEI; or

POs associated with the PEI include a PO associated with the WUS.

That a PO associated with the WUS is same as a PO associated with the PEI may be that the WUS and the PEI are configured by a network to be associated with a same PO.

That POs associated with the PEI include a PO associated with the WUS may be that the paging occasions associated with the PEI may be configured by a network to include the PO associated with the WUS. For example, the PEI is associated with and indicates more POs than those associated with the WUS.

In this implementation, because the PO associated with the WUS is the same as the PO associated with the PEI, or the POs associated with the PEI include the PO associated with the WUS, the WUS and the PEI may jointly indicate the terminal whether to monitor paging, thereby reducing the false wake-up probability.

In an embodiment, the WUS is a low power WUS.

In the embodiments of this application, the terminal monitors the first information, where the first information includes at least one of the WUS and the PEI; and the terminal determines, based on at least one item in the first information, whether to monitor paging, where the terminal is configured with any one of the following: configuration information of the WUS; and the configuration information of the WUS and configuration information of the PEI. In this way, whether to monitor paging is determined based on the at least one item in the first information. Therefore, the terminal can be prevented from monitoring paging in all paging cycles, thereby saving power of the terminal, and improving a power saving effect of the terminal.

FIG. 6 is a flowchart of an information sending method according to an embodiment of this application. As shown in FIG. 6, the method includes the following steps.

Step 601: A network side device sends first information, where the first information includes:
a WUS or a WUS and a PEI.

Optionally, the WUS carries at least one of the following:

a subgrouping-based wake-up indication; and
an indication of whether to monitor the PEI.

The subgrouping-based wake-up indication is used to indicate whether to wake up a terminal associated with a subgroup.

Optionally, the subgrouping-based wake-up indication includes at least one of the following:

wake-up indications for M first subgroups, where the first subgroups are grouped based on terminal identifiers, and M is an integer greater than or equal to 1; and
wake-up indications for Q second subgroups, where the second subgroups are assigned by a core network, and Q is an integer greater than or equal to 0.

Optionally, the WUS is associated with K paging occasions PO, and K is an integer greater than or equal to 1.

Optionally, terminals associated with a first PO are grouped into the M first subgroups; or terminals associated with a first PEI subgroup are grouped into the M first subgroups.

The first PO is a PO associated with the WUS, the first PEI subgroup is a subgroup included in a PEI associated with the WUS, the first subgroups are grouped based on the terminal identifiers, the WUS carries the wake-up indications based on the first subgroups, the wake-up indications are used to indicate whether to wake up the terminals associated with the subgroups, and M is an integer greater than or equal to 1.

Optionally, subgroups included in the PEI associated with the WUS include:

all PEI subgroups corresponding to a second PO or a PEI subgroup grouped based on terminal identifiers in PEI subgroups corresponding to a second PO.

The second PO includes at least one of the following:

a PO associated with the WUS; and
partial or all POs associated with the PEI.

Optionally, a grouping manner of the M first subgroups includes at least one of the following:

performing a first operation on the terminal identifier to obtain a first operation result, performing a modulo operation on the first operation result with respect to M, and adding a constant I to a result of the modulo operation to obtain a subgroup index of the terminal corresponding to the terminal identifier, where a value range of the subgroup index is 0 to M+I-1, and the constant I is an integer greater than or equal to 0; and
sequentially grouping or assigning the terminals into/to the M first subgroups in an ascending or descending order of the terminal identifiers.

Optionally, the first operation includes:

performing a rounding operation on (UE_ID/(N*Ns));
performing a rounding operation on (UE _ID/(N*Ns*subgroupsNumPerPO)); or
performing a rounding operation on (UE_ID/(N*Ns*subgroupsNumforUEID)).

N represents a number of paging frames PF in a paging cycle, Ns represents a number of POs in one PF, subgroupsNumPerPO represents a number of PEI subgroups grouped for terminals associated with one PO, and subgroupsNumforUEID represents a number of PEI subgroups grouped based on terminal identifiers for terminals associated with one PO.

Optionally, before the network side device sends the first information, the method further includes:

The network side device sends paging configuration information, where the paging configuration information includes at least one of the following:

indication information used to indicate whether to monitor both the WUS and the PEI; and
the configuration information of the WUS.

Optionally, the configuration information of the WUS includes at least one of the following:

a number of WUS subgroups grouped for terminals associated with one PO;

a number of WUS subgroups grouped for terminals associated with one PEI subgroup;

a number of WUS subgroups grouped for terminals associated with PEI subgroups in one PO;

a number of WUS subgroups grouped based on terminal identifiers for terminals associated with a PEI subgroup in one PO;

a number of WUS subgroups assigned and grouped by the core network;

a number of WUS subgroups grouped based on terminal identifiers; and

a number of bits of wake-up indication information carried in the WUS.

Optionally, a PO associated with the WUS is same as a PO associated with the PEI; or

POs associated with the PEI include a PO associated with the WUS.

It should be noted that this embodiment is used as an implementation of the network side device corresponding to the embodiment shown in FIG. 5. For a specific implementation thereof, refer to related descriptions of the embodiment shown in FIG. 5. To avoid repetition, details are not described in this embodiment.

The following uses a plurality of embodiments to illustrate the method provided in embodiments of this application.

Embodiment 1:

This embodiment mainly describes further LP-WUS subgrouping, and a subgrouping method is used to further implement LP-WUS subgrouping for UEs associated with all (or some) PEI subgroups in one PO.

The following are related formulas provided in this embodiment of this application to calculate a PF/PO and a PEI subgroup associated with the terminal.

$$(\text{SFN} + \text{PF\_offset})\bmod \text{T} = (\text{T div N}) * (\text{UE\_ID mod N})$$

$$i\_s = \text{floor}(\text{UE\_ID}/N)\bmod \text{Ns}$$

$$i_{po} = \big((UE_{ID}\,mod\,N) \times N_s + i_s\big)mod\,POnumPerPEI$$

$$SubgroupID = (floor\left(\frac{UE\_ID}{N \times N_s}\right))mod\,subgroupsNumForUEID) + (subgroupsNumPerPO$$
$$- subgroupsNumForUEID)$$

SFN represents a radio frame index, PF_offset represents a paging frame offset, T represents a paging cycle, i_s represents a number of a PO associated with one PF, $i_{po}$ represents a paging frame index, Ns represents a number of POs in one PF, *POnumPerPEI* represents a number of POs associated with one PEI, *SubgroupID* represents a subgroup identifier, subgroupsNumPerPO represents a number of PEI subgroups grouped for terminals associated with one PO, and subgroupsNumforUEID represents a number of PEI subgroups grouped based on terminal identifiers for terminals associated with one PO.

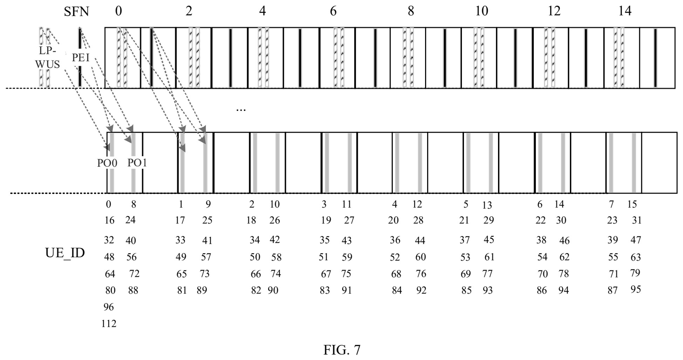

As shown in FIG. 7, under a given parameter, association relationships between the LP-WUS and the PEI of the terminal and the POs are shown as dashed-line parts. In this embodiment, FIG. 7 describes association relationships between both of the PEI and the LP-WUS and the POs. One LP-WUS is indicated to be associated with one PO, and one PEI is indicated to be associated with two POs. That is, the PO indicated to be associated with the LP-WUS is a subset of the POs indicated to be associated with the PEI. Therefore, it can be seen from FIG. 7 that each PO corresponds to one LP-WUS, and a corresponding configuration is as follows:

$$T=16,\ N=T/2,\ Ns=2,\ PF\_offset=0,\ PEI.$$

$$subgroupsNumForUEID = subgroupsNumPerPO = 4$$

$$WUSSubgroupsNumofPEISubgroupperPO =$$
$$WUSSubgroupsNumofUE\_IDbasedPEISgroupperPO = 2$$

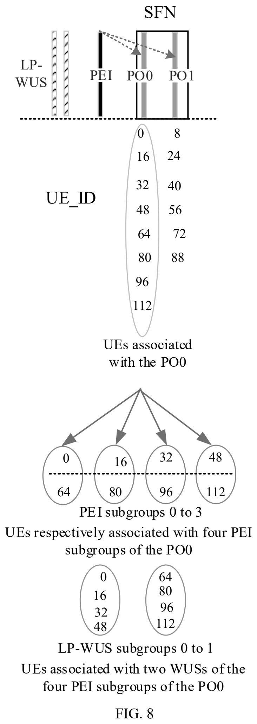

In the foregoing configuration, further, a specific UE subgrouping case is discussed based on FIG. 8. For example, associated UEs of one PO0 may be further grouped into four PEI subgroups based on the PEI, and UE_ID of each of UEs in each PEI subgroup is shown in FIG. 8. Further, the associated UEs of the four PEI subgroups are further grouped into two LP-WUS subgroups according to the following formula: LP-WUS_subgroup0 and LP-WUS_subgroup1. M is a number of UE_ID-based WUS subgroups, and M=2 in FIG. 8.

Manner 1: LP-WUS subgrouping is performed on UEs associated with PEI subgroups (PEI subgroup) based on a UE_ID-based subgroup (UE_ID-based subgroup) and a core network-assigned subgroup (CN assigned subgroup).

$$LP\text{-}WUS\_SubgroupID = (floor(UE\_ID/(N*Ns*subgroupsNumPerPO)) \bmod M)$$

Manner 2: LP-WUS subgrouping is further performed on only UEs associated with a UE_ID-based PEI subgroup.

$$LP\text{-}WUS\_SubgroupID = (floor(UE\_ID/(N*Ns*subgroupsNumforUEID)) \bmod M)$$

In the foregoing configuration, FIG. 8 shows a specific example of LP-WUS subgrouping.

UEs in the PO0 are subgrouped into a total of four PEI subgroups 0 to 3 based on the PEI. Further, LP-WUS subgrouping is further performed on the UEs associated with the four PEI subgroups to obtain LP-WUS subgroups p0 and p1. For a specific method for subgrouping different UE_ID-based UEs, refer to the foregoing manner 2.

Beneficial effects of this embodiment are as follows: Because a per UE paging rate (per UE paging rate) of the terminal is low, for example, 0.01%, 0.1%, or 1%, a probability that each PEI subgroup is woken up is low after the UEs associated with each PO are subgrouped into PEI subgroups. Moreover, a probability that a plurality of PEI subgroups are woken up is even lower. For example, if each PEI subgroup includes two UEs as shown in FIG. 8, and a probability that each UE is woken up is 1%, then a probability that each PEI subgroup is woken up is 1-99%*99%=1.99%. The probability that the plurality of PEI subgroups are simultaneously woken up is greater than or equal to 1.99%*1.99%=0.0396%, that is, in most cases, a single PEI subgroup is woken up. Based on this analysis, all PEI subgroups are further subgrouped by using the LP-WUS. Although each LP-WUS subgroup is associated with half of the terminals of all the PEI subgroups, because the probability that all the PEI subgroups are woken up is extremely low, in most cases, one PEI subgroup is further grouped into two LP-WUS subgroups, so that the UEs are more finely subgrouped, and the probability that each UE is falsely woken up because UE in a same subgroup is woken up is further reduced. For example, for UE whose UE_ID is 0, a probability that the UE is falsely woken up is 1.99%-1%=0.99% in the PEI subgroup. A probability that two PEI subgroups are simultaneously woken up is extremely low and negligible through further LP-WUS subgrouping, and the probability that the UE is falsely woken up approaches 0%. Thus, even if in a case that a number of LP-WUS subgroups is less than a number of PEI subgroups, LP-WUS subgrouping can also further help reduce the probability that the UE is falsely woken up. Certainly, it may be understood that in a case that the number of LP-WUS subgroups is greater than the number of PEI subgroups, the probability that the UE is falsely woken up is reduced compared with a case that LP-WUS subgrouping is not performed. Details are not described herein again.

In conclusion, UEs are further finely subgrouped into PEI and LP-WUS subgroups, to further reduce the probability that the UE is falsely woken up, thereby reducing power consumption of the terminal caused by false wake-up and the like.

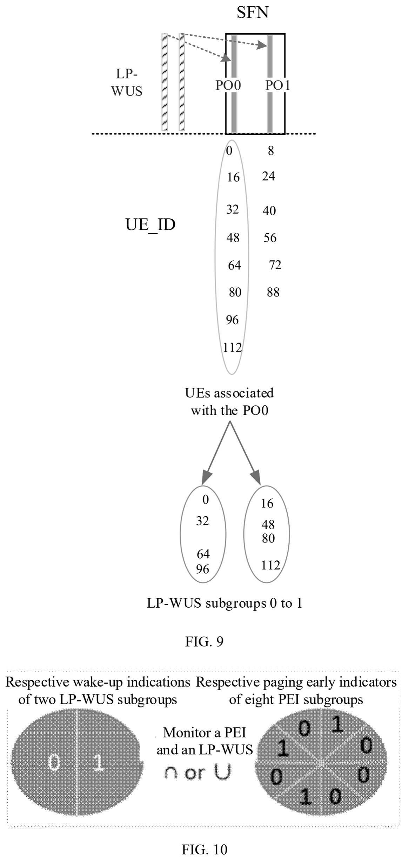

In addition, in an embodiment, the UE skips monitoring of the PEI and determines, based on detection of the LP-WUS, whether to monitor a PO associated therewith, as shown in FIG. 9. Because LP-WUS subgrouping is performed on UEs at a PO level, even if monitoring of the PEI is skipped, subgroup indication information of the terminal is not lost. However, it may be understood that because monitoring of the PEI is skipped, relying on only LP-WUS subgrouping causes the probability that the terminal is falsely woken up to increase.

In this embodiment, the terminal determines an LP-WUS subgroup thereof according to the following formula.

$$LP\text{-}WUS\_SubgroupID = (floor(UE\_ID/(N*Ns)) \bmod M)$$

In addition, a wake-up subgroup indication carried in the LP-WUS may be shown in Table 1.

**Table 1:**

| LP-WUS preamble (LP-WUS Preamble) | LP-WUS payload (LP-WUS payload) | | |
|---|---|---|---|
| | LP-WUS wake-up indication (wake up indication) | | Another field |
| | '0' or '1' | '0' or '1' | |
| | A 2-bit map indicates two LP-WUS subgroups. | | |

In another embodiment, the LP-WUS carries an indication of whether to monitor the PEI, so that a network can dynamically determine, based on a number of UEs in a subgroup, whether the UE needs to monitor the PEI, so as to reduce a false alarm rate (false alarm rate, FAR).

Embodiment 2:

This embodiment mainly describes performing subgroup indication for terminals associated with a PO by using the LP-WUS and the PEI separately. Details are as follows.

In an embodiment, the terminal may perform LP-WUS and PEI detection according to an implementation. For example, in a case that the network side device configures the PEI and the LP-WUS for the terminal, the terminal may choose to monitor the LP-WUS and/or the PEI based on a case thereof. In this case, wake-up subgroup indications of the LP-WUS and the PEI should be independent of each other, that is, without a mutual association relationship, to provide convenience and flexibility for monitoring of the terminal.

Based on this, this embodiment provides solutions for performing subgroup indication for terminals associated with a PO by using the LP-WUS and the PEI separately, as shown in FIG. 10, where 0 and 1 in FIG. 10 represent values of bits. Wake-up subgroup indications in bitmap (bitmap) forms are used for the LP-WUS and the PEI.

The LP-WUS indicates at least two subgroups and the PEI indicates a subgroup.

An LP-WUS subgroup 0 is indicated by a first bit, and an LP-WUS subgroup 1 is indicated by a second bit.

When the PEI and the LP-WUS are detected by the UE:

Option 1: The UE is only woken up when the LP-WUS and the PEI of all the subgroups associated therewith are "1 ".

Option 2: The UE is woken up when one of the subgroups associated therewith is "1".

Embodiment 3:

This embodiment mainly describes that the LP-WUS and/or the PEI carries a CN subgroup indication. Details are as follows.

In an embodiment, a priority of a CN-assigned subgroup wake-up indication (referred to as CN subgroup indication below) is higher than that of a UE_ID-based subgroup indication. That is, the terminal preferentially follows the CN-assigned subgroup wake-up indication.

In an embodiment, the network side device configures the LP-WUS to carry a CN subgroup indication (and a UE_ID-based subgroup indication), and configures the PEI to carry a CN subgroup indication (and a UE_ID-based subgroup indication). A terminal 0 supports these two CN subgroup indications. A specific behavior of the terminal 0 is as follows.

Manner 1: The terminal 0 determines, based on the CN-assigned subgroup wake-up indication carried in the wake-up signal, whether to monitor paging.

Manner 2: The terminal 0 determines, based on the CN-assigned subgroup wake-up indication carried in the PEI, whether to monitor paging.

Manner 3: The terminal 0 determines, based on the CN-assigned subgroup wake-up indications respectively carried in the LP-WUS and the PEI, whether to monitor paging.

In an embodiment, according to the foregoing manner 3, a monitoring sequence of the terminal is that the terminal first detects, based on a CN-assigned LP-WUS CN subgroup index, CN subgroup indication information corresponding to the index in the LP-WUS. The terminal continues to monitor corresponding CN subgroup indication information carried in the PEI. The terminal determines, based on at least one of the following, whether to monitor paging:

in a case that both the wake-up signal and the paging early indicator indicate to wake up the terminal, the terminal determines to monitor paging;
in a case that at least one of the wake-up signal and the paging early indicator indicates to wake up the terminal, the terminal determines to monitor paging;
in a case that neither the wake-up signal nor the paging early indicator indicates to wake up the terminal, the terminal determines to not monitor paging; and
in a case that at least one of the wake-up signal and the paging early indicator does not indicate to wake up the terminal, the terminal determines to not monitor paging.

In another embodiment, for UE1, the UE1 supports the CN subgroup indication in the PEI, but does not support the CN subgroup indication in the LP-WUS. The network configures the PEI to carry the CN subgroup indication or carry the CN subgroup indication and the UE_ID-based subgroup indication, and configures the LP-WUS to carry only the UE_ID-based subgroup indication or carry the CN subgroup indication and the UE_ID-based subgroup indication. In this scenario, the terminal detects the UE_ID-based subgroup indication associated therewith in the LP-WUS. In a case that the terminal 1 is woken up when the UE_ID-based subgroup indication in the LP-WUS is detected, the UE1 continues to monitor the PEI, and determines, based on the CN subgroup indication of the UE1 carried in the PEI, whether to monitor paging.

In another embodiment, for UE2, the UE2 does not support the CN subgroup indication in the PEI, and does not support the CN subgroup indication in the LP-WUS. The network configures the PEI to carry only the UE_ID-based subgroup indication or carry the CN subgroup indication and the UE_ID-based subgroup indication, and configures the LP-WUS to carry only the UE_ID-based subgroup indication or carry the CN subgroup indication and the UE_ID-based subgroup indication. In this scenario, the terminal detects the UE_ID-based subgroup indication associated therewith in the LP-WUS and/or the PEI. The terminal determines, based on the UE_ID-based subgroup indication in the LP-WUS and/or the UE_ID-based subgroup indication in the PEI, whether to monitor paging.

In another embodiment, for UE3, the UE3 does not support the CN subgroup indication in the PEI, but supports the CN subgroup indication in the LP-WUS. The network configures the PEI to carry the UE_ID-based subgroup indication or carry the CN subgroup indication and the UE_ID-based subgroup indication, and configures the LP-WUS to carry the CN subgroup indication or carry the CN subgroup indication and the UE_ID-based subgroup indication. In this scenario, the terminal detects the CN subgroup indication associated therewith in the LP-WUS. The terminal 3 determines, based on the CN subgroup indication in the LP-WUS, whether to monitor paging. Optionally, in this solution, the terminal 3 monitors only the LP-WUS without monitoring the PEI. That is, optionally, in a case that the terminal supports the CN subgroup in the LP-WUS but does not support the CN subgroup in the PEI, the terminal monitors only the LP-WUS without monitoring the PEI.

In the foregoing embodiment, the terminal supports, by default, the UE_ID-based subgroup.

In this embodiment of this application, the terminal may jointly determine a paging monitoring behavior based on monitoring of the PEI and the WUS. Details are as follows.

(Intersection) In a case that both the wake-up signal and the paging early indicator indicate to wake up the terminal, the terminal determines to monitor paging; or

(union) in a case that at least one of the wake-up signal and the paging early indicator indicates to wake up the terminal, the terminal determines to monitor paging; or

(intersection) in a case that neither the wake-up signal nor the paging early indicator indicates to wake up the terminal, the terminal determines to not monitor paging; or

(union) in a case that at least one of the wake-up signal and the paging early indicator does not indicate to wake up the terminal, the terminal determines to not monitor paging.

In this embodiment of this application, a design focuses on joint planning of the WUS subgroups and the PEI subgroups, to further save power. In addition, a design of how the terminal jointly determines the paging monitoring behavior based on the monitoring of the PEI and the WUS is further standardized, to avoid understanding inconsistency between the network side and the terminal, thereby enhancing communication reliability.

The paging monitoring determining method provided in this embodiment of this application may be performed by a paging monitoring determining apparatus. In the embodiments of this application, that the paging monitoring determining apparatus performs the paging monitoring determining method is used as an example to describe the paging monitoring determining apparatus provided in an embodiment of this application.

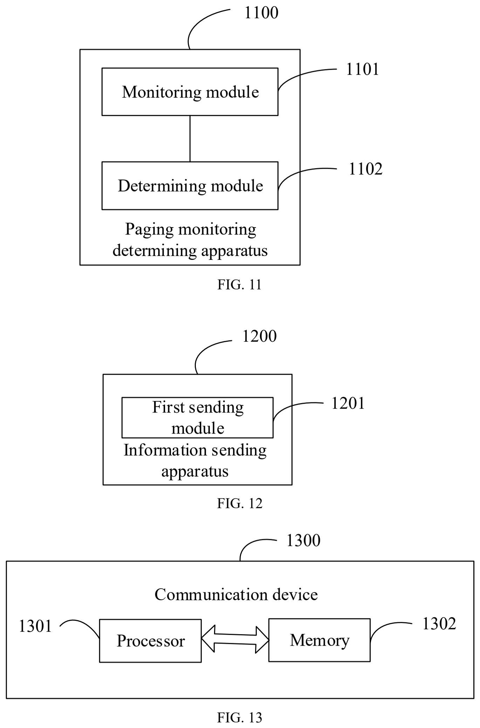

FIG. 11 is a diagram of a structure of a paging monitoring determining apparatus according to an embodiment of this application. As shown in FIG. 11, the paging monitoring determining apparatus 1100 includes:

a monitoring module 1101, configured to monitor first information, where the first information includes at least one of a wake-up signal WUS and a paging early indicator PEI; and

a determining module 1102, configured to determine, based on at least one item in the first information, whether to monitor paging.

A terminal is configured with any one of the following:

configuration information of the WUS; and
the configuration information of the WUS and configuration information of the PEI.

Optionally, the WUS carries at least one of the following:

a subgrouping-based wake-up indication; and
an indication of whether to monitor the PEI.

The subgrouping-based wake-up indication is used to indicate whether to wake up a terminal associated with a subgroup.

Optionally, the subgrouping-based wake-up indication includes at least one of the following:

wake-up indications for M first subgroups, where the first subgroups are grouped based on terminal identifiers, and M is an integer greater than or equal to 1; and
wake-up indications for Q second subgroups, where the second subgroups are assigned by a core network, and Q is an integer greater than or equal to 0.

Optionally, the WUS is associated with K paging occasions PO, and K is an integer greater than or equal to 1.

Optionally, terminals associated with a first PO are grouped into the M first subgroups; or
terminals associated with a first PEI subgroup are grouped into the M first subgroups.

The first PO is a PO associated with the WUS, the first PEI subgroup is a subgroup included in a PEI associated with the WUS, the first subgroups are grouped based on the terminal identifiers, the WUS carries the wake-up indications based on the first subgroups, the wake-up indications are used to indicate whether to wake up the terminals associated with the subgroups, and M is an integer greater than or equal to 1.

Optionally, subgroups included in the PEI associated with the WUS include:

all PEI subgroups corresponding to a second PO or a PEI subgroup grouped based on terminal identifiers in PEI subgroups corresponding to a second PO.

The second PO includes at least one of the following:

a PO associated with the WUS; and
partial or all POs associated with the PEI.

Optionally, a grouping manner of the M first subgroups includes at least one of the following:

performing a first operation on the terminal identifier to obtain a first operation result, performing a modulo operation on the first operation result with respect to M, and adding a constant I to a result of the modulo operation to obtain a subgroup index of the terminal corresponding to the terminal identifier, where a value range of the subgroup index is 0 to M+I-1, and the constant I is an integer greater than or equal to 0; and
sequentially grouping or assigning the terminals into/to the M first subgroups in an ascending or descending order of the terminal identifiers.

Optionally, a first subgroup index that the terminal associated with is obtained in the following manner:
performing the first operation on the terminal identifier of the terminal to obtain the first operation result, and performing the modulo operation on the first operation result with respect to M, and the result of the modulo operation is the first subgroup index that the terminal associated with.

Optionally, the first operation includes:

performing a rounding operation on $(UE\_ID/(N*Ns))$;
performing a rounding operation on $(UE\_ID/(N*Ns*subgroupsNumPerPO))$; or
performing a rounding operation on $(UE\_ID/(N*Ns*subgroupsNumforUEID))$.

N represents a number of paging frames PF in a paging cycle, Ns represents a number of POs in one PF, subgroupsNumPerPO represents a number of PEI subgroups grouped for terminals associated with one PO, and subgroupsNumforUEID represents a number of PEI subgroups grouped based on terminal identifiers for terminals associated with one PO.

Optionally, the determining module 1002 is configured to: in a case that the subgroups carried in the WUS include the first subgroups and the second subgroups, determine, based on the wake-up indication for the second subgroup associated with the terminal, whether to monitor paging.

Optionally, the determining module 1102 is configured to: in a case that the subgroups carried in the WUS include the first subgroups and the second subgroups, determine, based on the wake-up indication for the second subgroup associated with the terminal, whether to monitor paging.

Optionally, in a case that the first information includes the WUS and the PEI, the WUS carries the wake-up indications for the second subgroups, and the PEI carries paging early indicator information of a PEI subgroup assigned by the core network, the determining module 1102 is configured to:

determine, based on the wake-up indication for the second subgroup associated with the terminal, whether to monitor paging;

determine, based on the paging early indicator information of the PEI subgroup associated with the terminal and assigned by the core network that is carried in the PEI, whether to monitor paging; or

determine, based on the wake-up indication for the second subgroup associated with the terminal and the paging early indicator information of the PEI subgroup associated with the terminal and assigned by the core network that is carried in the PEI, whether to monitor paging.

Optionally, the apparatus further includes:

an obtaining module, configured to obtain paging configuration information, where the paging configuration information includes at least one of the following:

indication information used to indicate whether to monitor both the WUS and the PEI; and
the configuration information of the WUS.

Optionally, the configuration information of the WUS includes at least one of the following:

a number of WUS subgroups grouped for terminals associated with one PO;
a number of WUS subgroups grouped for terminals associated with one PEI subgroup;
a number of WUS subgroups grouped for terminals associated with PEI subgroups in one PO;
a number of WUS subgroups grouped based on terminal identifiers for terminals associated with a PEI subgroup in one PO;
a number of WUS subgroups assigned and grouped by the core network;
a number of WUS subgroups grouped based on terminal identifiers; and
a number of bits of wake-up indication information carried in the WUS.

Optionally, the number of WUS subgroups grouped for terminals associated with one PO is equal to a sum of the following two items:

the number of WUS subgroups assigned and grouped by the core network; and
the number of WUS subgroups grouped based on terminal identifiers.

Optionally, in a first case, the first information includes the PEI, and the first case includes at least one of the following:

the WUS is detected by the terminal;
the WUS indicates to wake up the terminal;
the WUS indicates to monitor the PEI; and
the terminal obtains an indication of monitoring both the WUS and the PEI.

Optionally, that the terminal determines, based on at least one item in the first information, whether to monitor paging includes at least one of the following:

in a second case, determining to monitor paging; and
in a third case, determining to not monitor paging.

The second case includes at least one of the following:

both the WUS and the PEI indicate to wake up the terminal; and
at least one of the WUS and the PEI indicates to wake up the terminal.

The third case includes at least one of the following:

neither the WUS nor the PEI indicates to wake up the terminal; and
at least one of the WUS and the PEI does not indicate to wake up the terminal.

Optionally, in a case that the first information includes the WUS and the PEI, the determining, based on at least one item in the first information, whether to monitor paging includes:

in a case that the PEI is not detected by the terminal, determining, by the terminal, to not monitor paging; or

in a case that the PEI is not detected by the terminal, determining, by the terminal based on a monitoring result or indication information of the WUS, whether to monitor paging.

Optionally, in a case that the first information includes the WUS and the PEI, the determining, based on at least one item in the first information, whether to monitor paging includes:

determining, based on the at least one item in the first information and network side configuration information, whether to monitor paging.

In a case that the PEI is not detected by the terminal, the terminal determines, based on the network side configuration information, whether to monitor paging.

Optionally, a PO associated with the WUS is same as a PO associated with the PEI; or

POs associated with the PEI include a PO associated with the WUS.

The paging monitoring determining apparatus may improve a power saving effect of the terminal.

The paging monitoring determining apparatus in this embodiment of this application may be an electronic device, for example, an electronic device with an operating system, or may be a component in an electronic device, for example, an integrated circuit or a chip. For example, the electronic device may be a terminal, or may be another device other than a terminal. For example, the terminal may include but is not limited to the foregoing listed types of terminals in the embodiments of this application. The another device may be a server, a network attached storage (Network Attached Storage, NAS), or the like. This is not specifically limited in this embodiment of this application.

The paging monitoring determining apparatus provided in this embodiment of this application can implement the processes implemented in the method embodiment in FIG. 5, and a same technical effect is achieved. To avoid repetition, details are not described herein again.

FIG. 12 is a diagram of a structure of another information sending apparatus according to an embodiment of this application. As shown in FIG. 12, the information sending apparatus 1200 includes:

a first sending module 1201, configured to send first information, where the first information includes:

a wake-up signal WUS, or a wake-up signal WUS and a paging early indicator PEI.

Optionally, the WUS carries at least one of the following:

a subgrouping-based wake-up indication; and

an indication of whether to monitor the PEI.

The subgrouping-based wake-up indication is used to indicate whether to wake up a terminal associated with a subgroup.

Optionally, the subgrouping-based wake-up indication includes at least one of the following:

wake-up indications for M first subgroups, where the first subgroups are grouped based on terminal identifiers, and M is an integer greater than or equal to 1; and

wake-up indications for Q second subgroups, where the second subgroups are assigned by a core network, and Q is an integer greater than or equal to 0.

Optionally, the WUS is associated with K paging occasions PO, and K is an integer greater than or equal to 1.

Optionally, terminals associated with a first PO are grouped into the M first subgroups; or

terminals associated with a first PEI subgroup are grouped into the M first subgroups.

The first PO is a PO associated with the WUS, the first PEI subgroup is a subgroup included in a PEI associated with the WUS, the first subgroups are grouped based on the terminal identifiers, the WUS carries the wake-up indications based on the first subgroups, the wake-up indications are used to indicate whether to wake up the terminals associated with the subgroups, and M is an integer greater than or equal to 1.

Optionally, subgroups included in the PEI associated with the WUS include:

all PEI subgroups corresponding to a second PO or a PEI subgroup grouped based on terminal identifiers in PEI subgroups corresponding to a second PO.

The second PO includes at least one of the following:

a PO associated with the WUS; and

partial or all POs associated with the PEI.

Optionally, a grouping manner of the M first subgroups includes at least one of the following:

performing a first operation on the terminal identifier to obtain a first operation result, performing a modulo operation on the first operation result with respect to M, and adding a constant I to a result of the modulo operation to obtain a subgroup index of the terminal corresponding to the terminal identifier, where a value range of the subgroup index is 0 to M+I-1, and the constant I is an integer greater than or equal to 0; and

sequentially grouping or assigning the terminals into/to the M first subgroups in an ascending or descending order of the terminal identifiers.

Optionally, the first operation includes:

performing a rounding operation on (UE_ID/(N*Ns));
performing a rounding operation on (UE _ID/(N*Ns*subgroupsNumPerPO)); or
performing a rounding operation on (UE_ID/(N*Ns*subgroupsNumforUEID)).

N represents a number of paging frames PF in a paging cycle, Ns represents a number of POs in one PF, subgroupsNumPerPO represents a number of PEI subgroups grouped for terminals associated with one PO, and subgroupsNumforUEID represents a number of PEI subgroups grouped based on terminal identifiers for terminals associated with one PO.

Optionally, the apparatus further includes:
a second sending module, configured to send paging configuration information, where the paging configuration information includes at least one of the following:

indication information used to indicate whether to monitor both the WUS and the PEI; and
the configuration information of the WUS.

Optionally, the configuration information of the WUS includes at least one of the following:

a number of WUS subgroups grouped for terminals associated with one PO;
a number of WUS subgroups grouped for terminals associated with one PEI subgroup;
a number of WUS subgroups grouped for terminals associated with PEI subgroups in one PO;
a number of WUS subgroups grouped based on terminal identifiers for terminals associated with a PEI subgroup in one PO;
a number of WUS subgroups assigned and grouped by the core network;
a number of WUS subgroups grouped based on terminal identifiers; and
a number of bits of wake-up indication information carried in the WUS.

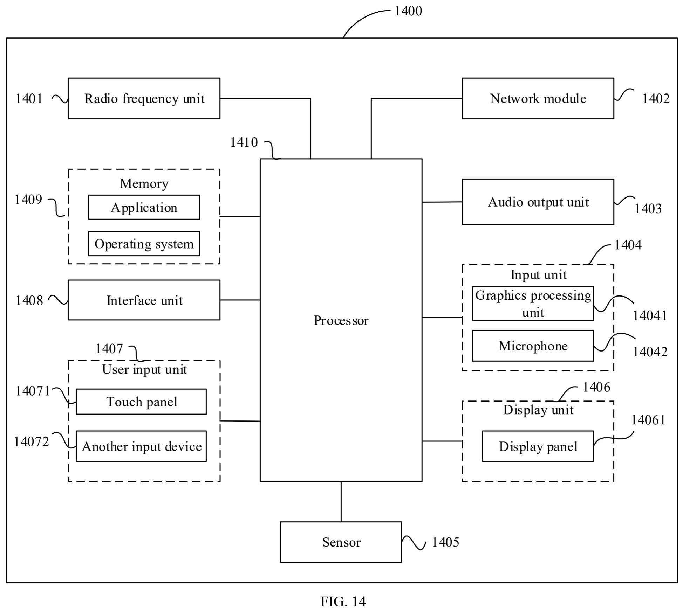

Optionally, a PO associated with the WUS is same as a PO associated with the PEI; or
POs associated with the PEI include a PO associated with the WUS.
The information sending apparatus may improve a power saving effect of the terminal.
The information determining apparatus in this embodiment of this application may be an electronic device, for example, an electronic device with an operating system, or may be a component in an electronic device, for example, an integrated circuit or a chip. The electronic device may be a terminal or a network side device.
The information determining apparatus provided in this embodiment of this application can implement processes implemented in the method embodiment in FIG. 6, and a same technical effect is achieved. To avoid repetition, details are not described herein again.
Optionally, as shown in FIG. 13, an embodiment of this application further provides a communication device 1300, including a processor 1301 and a memory 1302. The memory 1302 stores a program or instructions capable of running on the processor 1301. The steps of the foregoing paging monitoring determining embodiment are implemented when the program or instructions are executed by the processor 1301, and a same technical effect can be achieved. To avoid repetition, details are not described herein again.
An embodiment of this application further provides a terminal, including a processor and a communication interface. The communication interface is configured to monitor first information, where the first information includes at least one of a wake-up signal WUS and a paging early indicator PEI. The communication interface or the processor is configured to determine, based on at least item in the first information, whether to monitor paging, where the terminal is configured with any one of the following: configuration information of the WUS; and the configuration information of the WUS and configuration information of the PEI. Specifically, FIG. 14 is a schematic diagram of a hardware structure of a terminal for implementing an embodiment of this application.
A terminal 1400 includes but is not limited to at least some components in a radio frequency unit 1401, a network module 1402, an audio output unit 1403, an input unit 1404, a sensor 1405, a display unit 1406, a user input unit 1407, an interface unit 1408, a memory 1409, and a processor 1410.

A person skilled in the art may understand that the terminal 1400 may further include a power supply (for example, a battery) that supplies power to each component. The power supply may be logically connected to the processor 1410 by using a power management system, so as to implement functions such as charging management, discharging management, and power consumption management by using the power management system. The structure of the terminal shown in FIG. 14 does not constitute a limitation on the terminal. The terminal may include more or fewer components than those shown in the figure, or combine some components, or have different component arrangements. Details are not described herein again.

It should be understood that in this embodiment of this application, the input unit 1404 may include a graphics processing unit (Graphics Processing Unit, GPU) 14041 and a microphone 14042. The graphics processing unit 14041 processes image data of a still picture or a video obtained by an image capture apparatus (such as a camera) in a video capture mode or an image capture mode. The display unit 1406 may include a display panel 14061, and the display panel 14061 may be configured in a form of a liquid crystal display, an organic light-emitting diode, or the like. The user input unit 1407 includes at least one of a touch panel 14071 and another input device 14072. The touch panel 14071 is also referred to as a touchscreen. The touch panel 14071 may include two parts: a touch detection apparatus and a touch controller. The another input device 14072 may include but is not limited to a physical keyboard, a function key (such as a volume control key or an on/off key), a trackball, a mouse, and a joystick. Details are not described herein again.

In this embodiment of this application, after receiving downlink data from a network side device, the radio frequency unit 1401 may transmit the downlink data to the processor 1410 for processing. In addition, the radio frequency unit 1401 may send uplink data to the network side device. Generally, the radio frequency unit 1401 includes but is not limited to an antenna, an amplifier, a transceiver, a coupler, a low-noise amplifier, and a duplexer.

The memory 1409 may be configured to store a software program or instructions and various types of data. The memory 1409 may mainly include a first storage area for storing a program or instructions and a second storage area for storing data. The first storage area may store an operating system, an application or instructions required by at least one function (for example, a sound play function or an image play function), and the like. In addition, the memory 1409 may include a volatile memory or a nonvolatile memory, or the memory 1409 may include both a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1409 in this embodiment of this application includes but is not limited to these memories and any other suitable type of memory.

The processor 1410 may include one or more processing units. Optionally, the processor 1410 integrates an application processor and a modem processor. The application processor mainly processes operations related to an operating system, a user interface, an application, and the like. The modem processor mainly processes a wireless communication signal, such as a baseband processor. It may be understood that the modem processor may not be integrated into the processor 1410.

The radio frequency unit 1401 is configured to monitor first information, where the first information includes at least one of a wake-up signal WUS and a paging early indicator PEI.

The radio frequency unit 1401 or the processor 1410 is configured to determine, based on at least one item in the first information, whether to monitor paging.

The terminal is configured with any one of the following:

configuration information of the WUS; and
the configuration information of the WUS and configuration information of the PEI.

Optionally, the WUS carries at least one of the following:

a subgrouping-based wake-up indication; and
an indication of whether to monitor the PEI.

The subgrouping-based wake-up indication is used to indicate whether to wake up a terminal associated with a subgroup.

Optionally, the subgrouping-based wake-up indication includes at least one of the following:

wake-up indications for M first subgroups, where the first subgroups are grouped based on terminal identifiers, and M is an integer greater than or equal to 1; and

wake-up indications for Q second subgroups, where the second subgroups are assigned by a core network, and Q is an integer greater than or equal to 0.

Optionally, the WUS is associated with K paging occasions PO, and K is an integer greater than or equal to 1.

Optionally, terminals associated with a first PO are grouped into the M first subgroups; or

terminals associated with a first PEI subgroup are grouped into the M first subgroups.

The first PO is a PO associated with the WUS, the first PEI subgroup is a subgroup included in a PEI associated with the WUS, the first subgroups are grouped based on the terminal identifiers, the WUS carries the wake-up indications based on the first subgroups, the wake-up indications are used to indicate whether to wake up the terminals associated with the subgroups, and M is an integer greater than or equal to 1.

Optionally, subgroups included in the PEI associated with the WUS include:

all PEI subgroups corresponding to a second PO or a PEI subgroup grouped based on terminal identifiers in PEI subgroups corresponding to a second PO.

The second PO includes at least one of the following:

a PO associated with the WUS; and

partial or all POs associated with the PEI.

Optionally, a grouping manner of the M first subgroups includes at least one of the following:

performing a first operation on the terminal identifier to obtain a first operation result, performing a modulo operation on the first operation result with respect to M, and adding a constant I to a result of the modulo operation to obtain a subgroup index of the terminal corresponding to the terminal identifier, where a value range of the subgroup index is 0 to M+I-1, and the constant I is an integer greater than or equal to 0; and

sequentially grouping or assigning the terminals into/to the M first subgroups in an ascending or descending order of the terminal identifiers.

Optionally, a first subgroup index that the terminal associated with is obtained in the following manner:
performing the first operation on the terminal identifier of the terminal to obtain the first operation result, and performing the modulo operation on the first operation result with respect to M, and the result of the modulo operation is the first subgroup index that the terminal associated with.

Optionally, the first operation includes:

performing a rounding operation on (UE_ID/(N*Ns));

performing a rounding operation on (UE _ID/(N*Ns*subgroupsNumPerPO)); or

performing a rounding operation on (UE_ID/(N*Ns*subgroupsNumforUEID)).

N represents a number of paging frames PF in a paging cycle, Ns represents a number of POs in one PF, subgroupsNumPerPO represents a number of PEI subgroups grouped for terminals associated with one PO, and subgroupsNumforUEID represents a number of PEI subgroups grouped based on terminal identifiers for terminals associated with one PO.

Optionally, the determining, based on at least one item in the first information, whether to monitor paging includes:
in a case that the subgroups carried in the WUS include the first subgroups and the second subgroups, determining, based on the wake-up indication for the second subgroup associated with the terminal, whether to monitor paging.

Optionally, the determining, based on at least one item in the first information, whether to monitor paging includes:
in a case that the first information includes the WUS and the PEI, the WUS carries the wake-up indications for the second subgroups, and the PEI carries only paging early indicator information of a PEI subgroup grouped based on terminal identifiers, determining, based on the wake-up indication for the second subgroup associated with the terminal, whether to monitor paging.

Optionally, in a case that the first information includes the WUS and the PEI, the WUS carries the wake-up indications for the second subgroups, and the PEI carries paging early indicator information of a PEI subgroup assigned by the core network, the determining, based on at least one item in the first information, whether to monitor paging includes:

determining, based on the wake-up indication for the second subgroup associated with the terminal, whether to monitor paging;

determining, based on the paging early indicator information of the PEI subgroup associated with the terminal and assigned by the core network that is carried in the PEI, whether to monitor paging; or

determining, based on the wake-up indication for the second subgroup associated with the terminal and the paging early indicator information of the PEI subgroup associated with the terminal and assigned by the core network that is carried in the PEI, whether to monitor paging.

Optionally, before the terminal monitors the first information, the radio frequency unit 1401 is further configured to: obtain paging configuration information, where the paging configuration information includes at least one of the following:

indication information used to indicate whether to monitor both the WUS and the PEI; and

the configuration information of the WUS.

Optionally, the configuration information of the WUS includes at least one of the following:

a number of WUS subgroups grouped for terminals associated with one PO;

a number of WUS subgroups grouped for terminals associated with one PEI subgroup;

a number of WUS subgroups grouped for terminals associated with PEI subgroups in one PO;

a number of WUS subgroups grouped based on terminal identifiers for terminals associated with a PEI subgroup in one PO;

a number of WUS subgroups assigned and grouped by the core network;

a number of WUS subgroups grouped based on terminal identifiers; and

a number of bits of wake-up indication information carried in the WUS.

Optionally, the number of WUS subgroups grouped for terminals associated with one PO is equal to a sum of the following two items:

the number of WUS subgroups assigned and grouped by the core network; and

the number of WUS subgroups grouped based on terminal identifiers.

Optionally, in a first case, the first information includes the PEI, and the first case includes at least one of the following:

the WUS is detected by the terminal;

the WUS indicates to wake up the terminal;

the WUS indicates to monitor the PEI; and

the terminal obtains an indication of monitoring both the WUS and the PEI.

Optionally, that the terminal determines, based on at least one item in the first information, whether to monitor paging includes at least one of the following:

in a second case, determining to monitor paging; and

in a third case, determining to not monitor paging.

The second case includes at least one of the following:

both the WUS and the PEI indicate to wake up the terminal; and

at least one of the WUS and the PEI indicates to wake up the terminal.

The third case includes at least one of the following:

neither the WUS nor the PEI indicates to wake up the terminal; and

at least one of the WUS and the PEI does not indicate to wake up the terminal.

Optionally, in a case that the first information includes the WUS and the PEI, the determining, based on at least one item in the first information, whether to monitor paging includes:

in a case that the PEI is not detected by the terminal, determining, by the terminal, to not monitor paging; or

in a case that the PEI is not detected by the terminal, determining, by the terminal based on a monitoring result or indication information of the WUS, whether to monitor paging.

Optionally, in a case that the first information includes the WUS and the PEI, the determining, based on at least one item in the first information, whether to monitor paging includes:

determining, based on the at least one item in the first information and network side configuration information, whether to monitor paging.

In a case that the PEI is not detected by the terminal, the terminal determines, based on the network side configuration information, whether to monitor paging.

Optionally, a PO associated with the WUS is same as a PO associated with the PEI; or

POs associated with the PEI include a PO associated with the WUS.

The terminal may improve a power saving effect of the terminal.

It may be understood that for implementation processes of the implementations mentioned in this embodiment, refer to related descriptions in the method embodiment, and a same or corresponding technical effect is achieved. To avoid repetition, details are not described herein again.

An embodiment of this application further provides a network side device, including a processor and a communication interface. The communication interface is configured to send first information, where the first information includes a wake-up signal WUS, or a wake-up signal WUS and a paging early indicator PEI.

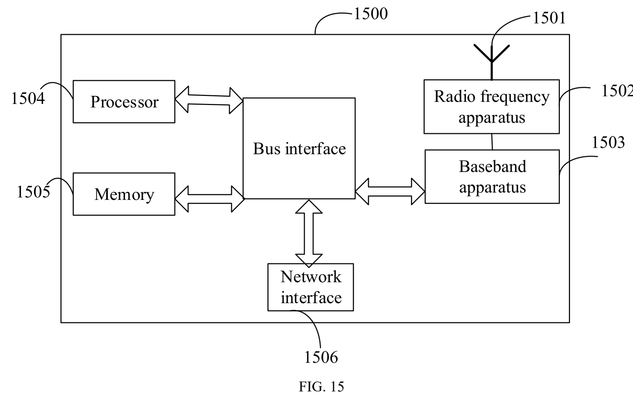

As shown in FIG. 15, the network side device 1500 includes an antenna 1501, a radio frequency apparatus 1502, a baseband apparatus 1503, a processor 1504, and a memory 1505. The antenna 1501 is connected to the radio frequency apparatus 1502. In an uplink direction, the radio frequency apparatus 1502 receives information through the antenna 1501, and sends the received information to the baseband apparatus 1503 for processing. In a downlink direction, the baseband apparatus 1503 processes to-be-sent information, and sends the processed information to the radio frequency apparatus 1502. After processing the received information, the radio frequency apparatus 1502 sends the processed information through the antenna 1501.

The method performed by a radio access network device in the foregoing embodiment may be implemented in the baseband apparatus 1503, and the baseband apparatus 1503 includes a baseband processor.

For example, the baseband apparatus 1503 may include at least one baseband board. A plurality of chips are disposed on the baseband board. As shown in FIG. 15, one of the chips is, for example, the baseband processor, and is connected to the memory 1505 by using a bus interface, to invoke a program in the memory 1505 to perform an operation of a network side device shown in the foregoing method embodiment.

The radio access network device may further include a network interface 1506. For example, the interface is a common public radio interface (common public radio interface, CPRI).

Specifically, the network side device 1500 in this embodiment of this application further includes instructions or a program stored in the memory 1505 and capable of running on the processor 1504. The processor 1504 invokes the instructions or the program in the memory 1505 to perform the method performed by the modules shown in FIG. 5, and a same technical effect is achieved. To avoid repetition, details are not described herein again.

The radio frequency apparatus 1502 is configured to send first information, where the first information includes: a wake-up signal WUS, or a wake-up signal WUS and a paging early indicator PEI.

Optionally, the WUS carries at least one of the following:

a subgrouping-based wake-up indication; and
an indication of whether to monitor the PEI.

The subgrouping-based wake-up indication is used to indicate whether to wake up a terminal associated with a subgroup.

Optionally, the subgrouping-based wake-up indication includes at least one of the following:

wake-up indications for M first subgroups, where the first subgroups are grouped based on terminal identifiers, and M is an integer greater than or equal to 1; and
wake-up indications for Q second subgroups, where the second subgroups are assigned by a core network, and Q is an integer greater than or equal to 0.

Optionally, the WUS is associated with K paging occasions PO, and K is an integer greater than or equal to 1.

Optionally, terminals associated with a first PO are grouped into the M first subgroups; or

terminals associated with a first PEI subgroup are grouped into the M first subgroups.

The first PO is a PO associated with the WUS, the first PEI subgroup is a subgroup included in a PEI associated with the WUS, the first subgroups are grouped based on the terminal identifiers, the WUS carries the wake-up indications based on the first subgroups, the wake-up indications are used to indicate whether to wake up the terminals associated with the subgroups, and M is an integer greater than or equal to 1.

Optionally, subgroups included in the PEI associated with the WUS include:

all PEI subgroups corresponding to a second PO or a PEI subgroup grouped based on terminal identifiers in PEI subgroups corresponding to a second PO.

The second PO includes at least one of the following:

a PO associated with the WUS; and
partial or all POs associated with the PEI.

Optionally, a grouping manner of the M first subgroups includes at least one of the following:

performing a first operation on the terminal identifier to obtain a first operation result, performing a modulo operation on the first operation result with respect to M, and adding a constant I to a result of the modulo operation to obtain a subgroup index of the terminal corresponding to the terminal identifier, where a value range of the subgroup index is 0 to M+I-1, and the constant I is an integer greater than or equal to 0; and
sequentially grouping or assigning the terminals into/to the M first subgroups in an ascending or descending order of the terminal identifiers.

Optionally, the first operation includes:

performing a rounding operation on (UE_ID/(N*Ns));
performing a rounding operation on (UE _ID/(N*Ns*subgroupsNumPerPO)); or
performing a rounding operation on (UE_ID/(N*Ns*subgroupsNumforUEID)).

N represents a number of paging frames PF in a paging cycle, Ns represents a number of POs in one PF, subgroupsNumPerPO represents a number of PEI subgroups grouped for terminals associated with one PO, and subgroupsNumforUEID represents a number of PEI subgroups grouped based on terminal identifiers for terminals associated with one PO.

Optionally, before sending the first information, the radio frequency apparatus 1502 is further configured to: send paging configuration information, where the paging configuration information includes at least one of the following:

indication information used to indicate whether to monitor both the WUS and the PEI; and
the configuration information of the WUS.

Optionally, the configuration information of the WUS includes at least one of the following:

a number of WUS subgroups grouped for terminals associated with one PO;
a number of WUS subgroups grouped for terminals associated with one PEI subgroup;
a number of WUS subgroups grouped for terminals associated with PEI subgroups in one PO;
a number of WUS subgroups grouped based on terminal identifiers for terminals associated with a PEI subgroup in one PO;
a number of WUS subgroups assigned and grouped by the core network;
a number of WUS subgroups grouped based on terminal identifiers; and
a number of bits of wake-up indication information carried in the WUS.

Optionally, a PO associated with the WUS is same as a PO associated with the PEI; or
POs associated with the PEI include a PO associated with the WUS.
The network side device may improve a power saving effect of the terminal.
An embodiment of this application further provides a readable storage medium. The readable storage medium stores a program or instructions. Processes of the foregoing paging monitoring determining method or information sending method embodiment are implemented when the program or the instructions are executed by a processor, and a same technical effect can be achieved. To avoid repetition, details are not described herein again.
The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.
An embodiment of this application further provides a chip. The chip includes a processor and a communication interface. The communication interface is coupled to the processor. The processor is configured to run a program or instructions, to implement the processes of the foregoing paging monitoring determining method or information sending method embodiment, and a same technical effect can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes of the foregoing paging monitoring determining method or information sending method embodiment, and a same technical effect can be achieved. To avoid repetition, details are not described herein again.

An embodiment of this application further provides a wireless communication system, including a terminal and a network side device. The terminal may be configured to perform the steps of the paging monitoring determining method provided on a terminal side in the embodiments of this application or the steps of the information sending method provided on a network side device side in the embodiments of this application.

It should be noted that in this specification, the term "include", "comprise", or any other variant thereof is intended to cover a non-exclusive inclusion, so that a process, method, article, or apparatus that includes a list of elements not only includes those elements but also includes other elements that are not expressly listed, or further includes elements inherent to such a process, method, article, or apparatus. Without more constraints, an element preceded by "includes a ..." does not preclude the existence of additional identical elements in the process, method, article, or apparatus that includes the element. In addition, it should be noted that the scope of the methods and apparatuses in the implementations of this application is not limited to performing functions in a sequence shown or discussed, and may further include performing functions in a basically simultaneous manner or in a reverse sequence based on related functions. For example, the described methods may be performed in an order different from the described order, and various steps may be added, omitted, or combined. In addition, features described with reference to some examples may be combined in other examples.

According to the foregoing descriptions of the implementations, a person skilled in the art may clearly understand that the methods in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for enabling a terminal or a network side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

**Claims**

1. A paging monitoring determining method, comprising:

   monitoring, by a terminal, first information, wherein the first information comprises at least one of a wake-up signal WUS and a paging early indicator PEI; and
   determining, by the terminal based on at least one item in the first information, whether to monitor paging, wherein the terminal is configured with any one of the following:

   configuration information of the WUS; and
   the configuration information of the WUS and configuration information of the PEI.

2. The method according to claim 1, wherein the WUS carries at least one of the following:

   a subgrouping-based wake-up indication; and
   an indication of whether to monitor the PEI; and
   the subgrouping-based wake-up indication is used to indicate whether to wake up a terminal associated with a subgroup.

3. The method according to claim 2, wherein the subgrouping-based wake-up indication comprises at least one of the following:

   wake-up indications for M first subgroups, wherein the first subgroups are grouped based on terminal identifiers, and M is an integer greater than or equal to 1; and

wake-up indications for Q second subgroups, wherein the second subgroups are assigned by a core network, and Q is an integer greater than or equal to 0.

4. The method according to any one of claims 1 to 3, wherein the WUS is associated with K paging occasions PO, and K is an integer greater than or equal to 1.

5. The method according to any one of claims 1 to 4, wherein

terminals associated with a first PO are grouped into the M first subgroups; or

terminals associated with a first PEI subgroup are grouped into the M first subgroups; and

the first PO is a PO associated with the WUS, the first PEI subgroup is a subgroup comprised in a PEI associated with the WUS, the first subgroups are grouped based on the terminal identifiers, the WUS carries the wake-up indications based on the first subgroups, the wake-up indications are used to indicate whether to wake up the terminals associated with the subgroups, and M is an integer greater than or equal to 1.

6. The method according to claim 5, wherein subgroups comprised in the PEI associated with the WUS comprise:

all PEI subgroups corresponding to a second PO or a PEI subgroup grouped based on terminal identifiers in PEI subgroups corresponding to a second PO; and

the second PO comprises at least one of the following:

a PO associated with the WUS; and

partial or all POs associated with the PEI.

7. The method according to claim 3, 5, or 6, wherein a grouping manner of the M first subgroups comprises at least one of the following:

performing a first operation on the terminal identifier to obtain a first operation result, performing a modulo operation on the first operation result with respect to M, and adding a constant I to a result of the modulo operation to obtain a subgroup index of the terminal corresponding to the terminal identifier, wherein a value range of the subgroup index is 0 to M+I-1, and the constant I is an integer greater than or equal to 0; and

sequentially grouping or assigning the terminals into/to the M first subgroups in an ascending or descending order of the terminal identifiers.

8. The method according to claim 3, 5, 6, or 7, wherein a first subgroup index that the terminal associated with is obtained in the following manner:

performing the first operation on the terminal identifier of the terminal to obtain the first operation result, and performing the modulo operation on the first operation result with respect to M, and the result of the modulo operation is the first subgroup index that the terminal associated with.

9. The method according to claim 7 or 8, wherein the first operation comprises:

performing a rounding operation on (UE_ID/(N*Ns));

performing a rounding operation on (UE _ID/(N*Ns*subgroupsNumPerPO)); or

performing a rounding operation on (UE_ID/(N*Ns*subgroupsNumforUEID)); and

N represents a number of paging frames PF in a paging cycle, Ns represents a number of POs in one PF, subgroupsNumPerPO represents a number of PEI subgroups grouped for terminals associated with one PO, and subgroupsNumforUEID represents a number of PEI subgroups grouped based on terminal identifiers for terminals associated with one PO.

10. The method according to claim 3, wherein in a case that subgroups carried in the WUS comprise the first subgroups and the second subgroups, the determining, by the terminal based on at least one item in the first information, whether to monitor paging comprises:

in a case that the subgroups carried in the WUS comprise the first subgroups and the second subgroups, determining, by the terminal based on the wake-up indication for the second subgroup associated with the terminal, whether to monitor paging.

11. The method according to claim 3 or 10, wherein the determining, by the terminal based on at least one item in the first information, whether to monitor paging comprises:
in a case that the first information comprises the WUS and the PEI, the WUS carries the wake-up indications for the second subgroups, and the PEI carries only paging early indicator information of a PEI subgroup grouped based on terminal identifiers, determining, by the terminal based on the wake-up indication for the second subgroup associated with the terminal, whether to monitor paging.

12. The method according to claim 3 or 10, wherein
in a case that the first information comprises the WUS and the PEI, the WUS carries the wake-up indications for the second subgroups, and the PEI carries paging early indicator information of a PEI subgroup assigned by the core network, the determining, by the terminal based on at least one item in the first information, whether to monitor paging comprises:

determining, by the terminal based on the wake-up indication for the second subgroup associated with the terminal, whether to monitor paging;
determining, by the terminal based on the paging early indicator information of the PEI subgroup associated with the terminal and assigned by the core network that is carried in the PEI, whether to monitor paging; or
determining, by the terminal based on the wake-up indication for the second subgroup associated with the terminal and the paging early indicator information of the PEI subgroup associated with the terminal and assigned by the core network that is carried in the PEI, whether to monitor paging.

13. The method according to any one of claims 1 to 12, wherein before the monitoring, by a terminal, first information, the method further comprises:
obtaining, by the terminal, paging configuration information, wherein the paging configuration information comprises at least one of the following:

indication information used to indicate whether to monitor both the WUS and the PEI; and
the configuration information of the WUS.

14. The method according to claim 13, wherein the configuration information of the WUS comprises at least one of the following:

a number of WUS subgroups grouped for terminals associated with one PO;
a number of WUS subgroups grouped for terminals associated with one PEI subgroup;
a number of WUS subgroups grouped for terminals associated with PEI subgroups in one PO;
a number of WUS subgroups grouped based on terminal identifiers for terminals associated with a PEI subgroup in one PO;
a number of WUS subgroups assigned and grouped by the core network;
a number of WUS subgroups grouped based on terminal identifiers; and
a number of bits of wake-up indication information carried in the WUS.

15. The method according to claim 14, wherein the number of WUS subgroups grouped for terminals associated with one PO is equal to a sum of the following two items:

the number of WUS subgroups assigned and grouped by the core network; and
the number of WUS subgroups grouped based on terminal identifiers.

16. The method according to any one of claims 1 to 15, wherein in a first case, the first information comprises the PEI, and the first case comprises at least one of the following:

the WUS is detected by the terminal;
the WUS indicates to wake up the terminal;
the WUS indicates to monitor the PEI; and
the terminal obtains an indication of monitoring both the WUS and the PEI.

17. The method according to any one of claims 1 to 16, wherein the determining, by the terminal based on at least one item in the first information, whether to monitor paging comprises at least one of the following:

in a second case, determining to monitor paging; and
in a third case, determining to not monitor paging;
the second case comprises at least one of the following:

both the WUS and the PEI indicate to wake up the terminal; and
at least one of the WUS and the PEI indicates to wake up the terminal; and
the third case comprises at least one of the following:

neither the WUS nor the PEI indicates to wake up the terminal; and
at least one of the WUS and the PEI does not indicate to wake up the terminal.

18. The method according to any one of claims 1 to 16, wherein in a case that the first information comprises the WUS and the PEI, the determining, based on at least one item in the first information, whether to monitor paging comprises:

in a case that the PEI is not detected by the terminal, determining, by the terminal, to not monitor paging; or
in a case that the PEI is not detected by the terminal, determining, by the terminal based on a monitoring result or indication information of the WUS, whether to monitor paging.

19. The method according to any one of claims 1 to 16, wherein in a case that the first information comprises the WUS and the PEI, the determining, based on at least one item in the first information, whether to monitor paging comprises:

determining, based on the at least one item in the first information and network side configuration information, whether to monitor paging; and
in a case that the PEI is not detected by the terminal, the terminal determines, based on the network side configuration information, whether to monitor paging.

20. The method according to any one of claims 1 to 19, wherein a PO associated with the WUS is same as a PO associated with the PEI; or
POs associated with the PEI comprise a PO associated with the WUS.

21. An information sending method, comprising:
sending, by a network side device, first information, wherein the first information comprises:
a wake-up signal WUS, or a wake-up signal WUS and a paging early indicator PEI.

22. The method according to claim 21, wherein the WUS carries at least one of the following:

a subgrouping-based wake-up indication; and
an indication of whether to monitor the PEI; and
the subgrouping-based wake-up indication is used to indicate whether to wake up a terminal associated with a subgroup.

23. The method according to claim 22, wherein the subgrouping-based wake-up indication comprises at least one of the following:

wake-up indications for M first subgroups, wherein the first subgroups are grouped based on terminal identifiers, and M is an integer greater than or equal to 1; and
wake-up indications for Q second subgroups, wherein the second subgroups are assigned by a core network, and Q is an integer greater than or equal to 0.

24. The method according to any one of claims 21 to 23, wherein before the sending, by a network side device, first information, the method further comprises:
sending, by the network side device, paging configuration information, wherein the paging configuration information comprises at least one of the following:

indication information used to indicate whether to monitor both the WUS and the PEI; and
configuration information of the WUS.

25. The method according to claim 24, wherein the configuration information of the WUS comprises at least one of the following:

a number of WUS subgroups grouped for terminals associated with one PO;
a number of WUS subgroups grouped for terminals associated with one PEI subgroup;
a number of WUS subgroups grouped for terminals associated with PEI subgroups in one PO;
a number of WUS subgroups grouped based on terminal identifiers for terminals associated with a PEI subgroup in one PO;
a number of WUS subgroups assigned and grouped by the core network;
a number of WUS subgroups grouped based on terminal identifiers; and
a number of bits of wake-up indication information carried in the WUS.

26. A paging monitoring determining apparatus, comprising:

a monitoring module, configured to monitor first information, wherein the first information comprises at least one of a wake-up signal WUS and a paging early indicator PEI; and
a determining module, configured to determine, based on at least one item in the first information, whether to monitor paging, wherein
a terminal is configured with any one of the following:

configuration information of the WUS; and
the configuration information of the WUS and configuration information of the PEI.

27. An information sending apparatus, comprising:
a first sending module, configured to send first information, wherein the first information comprises:
a wake-up signal WUS, or a wake-up signal WUS and a paging early indicator PEI.

28. A terminal, comprising a processor and a memory, wherein the memory stores a program or instructions capable of running on the processor, and the steps of the paging monitoring determining method according to any one of claims 1 to 20 are implemented when the program or the instructions are executed by the processor.

29. A network side device, comprising a processor and a memory, wherein the memory stores a program or instructions capable of running on the processor, and the steps of the information sending method according to any one of claims 21 to 25 are implemented when the program or the instructions are executed by the processor.

30. A readable storage medium, wherein the readable storage medium stores a program or instructions, and the steps of the paging monitoring determining method according to any one of claims 1 to 20 are implemented when the program or the instructions are executed by a processor, or the steps of the information sending method according to any one of claims 21 to 25 are implemented when the program or the instructions are executed by a processor.

FIG. 1

FIG. 2

FIG. 3

| Subgroup p0 | Subgroup p1 | ... | Subgroup p0 | Subgroup p1 | ... | Subgroup p0 | Subgroup p1 | ... | Subgroup p0 | Subgroup p1 | ... |
|---|---|---|---|---|---|---|---|---|---|---|---|

Bit field 0
PO1: PO_index = 0

Bit field 1
PO2: PO_index = 1

Bit field 2
PO3: PO_index = 2

Bit field 3
PO4: PO_index = 3

FIG. 4

A terminal monitors first information — 501

The terminal determines, based on at least one item in the first information, whether to monitor paging — 502

FIG. 5

A network side device sends first information — 601

FIG. 6

SFN  0      2      4      6      8      10     12     14

LP-
WUS

PEI

...

PO0  PO1

UE_ID

| 0 | 8 | | 1 | 9 | | 2 | 10 | | 3 | 11 | | 4 | 12 | | 5 | 13 | | 6 | 14 | | 7 | 15 |
| 16 | 24 | | 17 | 25 | | 18 | 26 | | 19 | 27 | | 20 | 28 | | 21 | 29 | | 22 | 30 | | 23 | 31 |
| 32 | 40 | | 33 | 41 | | 34 | 42 | | 35 | 43 | | 36 | 44 | | 37 | 45 | | 38 | 46 | | 39 | 47 |
| 48 | 56 | | 49 | 57 | | 50 | 58 | | 51 | 59 | | 52 | 60 | | 53 | 61 | | 54 | 62 | | 55 | 63 |
| 64 | 72 | | 65 | 73 | | 66 | 74 | | 67 | 75 | | 68 | 76 | | 69 | 77 | | 70 | 78 | | 71 | 79 |
| 80 | 88 | | 81 | 89 | | 82 | 90 | | 83 | 91 | | 84 | 92 | | 85 | 93 | | 86 | 94 | | 87 | 95 |
| 96 | | | | | | | | | | | | | | | | | | | | | | | |
| 112 | | | | | | | | | | | | | | | | | | | | | | | |

FIG. 7

SFN

LP-
WUS

PEI  PO0  PO1

UE_ID

| | |
|---|---|
| 0 | 8 |
| 16 | 24 |
| 32 | 40 |
| 48 | 56 |
| 64 | 72 |
| 80 | 88 |
| 96 | |
| 112 | |

UEs associated
with the PO0

| 0 | 16 | 32 | 48 |
|---|---|---|---|
| 64 | 80 | 96 | 112 |

PEI subgroups 0 to 3

UEs respectively associated with four PEI
subgroups of the PO0

| 0 | 64 |
|---|---|
| 16 | 80 |
| 32 | 96 |
| 48 | 112 |

LP-WUS subgroups 0 to 1

UEs associated with two WUSs of the
four PEI subgroups of the PO0

FIG. 8

SFN

LP-
WUS                    PO0        PO1

UE_ID

| | |
|---|---|
| 0 | 8 |
| 16 | 24 |
| 32 | 40 |
| 48 | 56 |
| 64 | 72 |
| 80 | 88 |
| 96 | |
| 112 | |

UEs associated
with the PO0

| | |
|---|---|
| 0 | 16 |
| 32 | 48 |
| | 80 |
| 64 | 112 |
| 96 | |

LP-WUS subgroups 0 to 1

FIG. 9

Respective wake-up indications        Respective paging early indicators
of two LP-WUS subgroups                    of eight PEI subgroups

Monitor a PEI
and an LP-WUS

0    1                    ∩ or U

0    1
1        0
0        0
1    0

FIG. 10

1100

Monitoring module — 1101

Determining module — 1102

Paging monitoring
determining apparatus

FIG. 11

1200

First sending
module — 1201

Information sending
apparatus

FIG. 12

1300

Communication device

1301 — Processor ⟺ Memory — 1302

FIG. 13

1400

1401 — Radio frequency unit

Network module — 1402

1410

1409 — Memory
Application
Operating system

1408 — Interface unit

1407
User input unit
14071 — Touch panel
14072 — Another input device

Processor

Audio output unit — 1403

1404
Input unit
Graphics processing unit — 14041
Microphone — 14042

1406
Display unit — 14061
Display panel

Sensor — 1405

FIG. 14

1500

1501

1504 Processor

Bus interface

Radio frequency apparatus 1502

1505 Memory

Baseband apparatus 1503

Network interface

1506

FIG. 15

## INTERNATIONAL SEARCH REPORT

| International application No. |
|---|
| **PCT/CN2024/103474** |

### A.    CLASSIFICATION OF SUBJECT MATTER

H04W 68/00(2009.01)i

According to International Patent Classification (IPC) or to both national classification and IPC

### B.    FIELDS SEARCHED

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE; 3GPP: 唤醒信号, 寻呼提前指示, 寻呼预告指示, 监听, 寻呼, 分组, 唤醒, 配置, 终端, wake up signal, WUS, paging early indicator, PEI, paging, listen, wake up, configuration, terminal, UE

### C.    DOCUMENTS CONSIDERED TO BE RELEVANT

| Category* | Citation of document, with indication, where appropriate, of the relevant passages | Relevant to claim No. |
|---|---|---|
| X | WO 2022021023 A1 (GUANGDONG OPPO MOBILE TELECOMMUNICATIONS CORP., LTD.) 03 February 2022 (2022-02-03) description, page 1 line 5-page 15 line 5 | 1-30 |
| X | WO 2022126391 A1 (BEIJING XIAOMI MOBILE SOFTWARE CO., LTD.) 23 June 2022 (2022-06-23) description, page 1 line 5-page 22 line 18 | 1-30 |
| A | CN 115734321 A (HUAWEI TECHNOLOGIES CO., LTD.) 03 March 2023 (2023-03-03) entire document | 1-30 |
| A | CN 115883036 A (HUAWEI TECHNOLOGIES CO., LTD.) 31 March 2023 (2023-03-31) entire document | 1-30 |
| A | WO 2023284261 A1 (SPREADTRUM COMMUNICATIONS (SHANGHAI) CO., LTD.) 19 January 2023 (2023-01-19) entire document | 1-30 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 August 2024** | **29 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/103474** |

| Patent document cited in search report | | | Publication date (day/month/year) | Patent family member(s) | Publication date (day/month/year) |
| --- | --- | --- | --- | --- | --- |
| WO | 2022021023 | A1 | 03 February 2022 | None | |
| WO | 2022126391 | A1 | 23 June 2022 | None | |
| CN | 115734321 | A | 03 March 2023 | None | |
| CN | 115883036 | A | 31 March 2023 | None | |
| WO | 2023284261 | A1 | 19 January 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310847056X